# EUROPEAN PATENT APPLICATION

(11) **EP 4 734 517 A1**
(43) Date of publication of application: **29.04.2026**
(21) Application number: 23942486.4
(22) Date of filing: 11.12.2023
(51) Int. Cl.: H04N 19/597, G06T 9/00

(54) **INFORMATION PROCESSING DEVICE AND METHOD**

(30) Priority: 21.06.2023 JP 2023101795
(71) Applicant: Sony Group Corporation, Tokyo 108-0075 (JP)
(72) Inventor: SAKURAI, Hironari, Tokyo 108-0075 (JP)
(74) Representative: D Young & Co LLP
(86) International application number: PCT/JP2023/044227
(87) International publication number: WO 2024/262058

(57) **Abstract**

The present disclosure relates to an information processing apparatus and method that are capable of suppressing an increase in transmission capacity.

Atlas transformation is performed on alpha images of 3D data to generate an atlas image of an alpha component, the atlas image of the alpha component is encoded, the atlas transformation is performed on an RGB image of the 3D data to generate an atlas image of RGB components, and the atlas image of the RGB components is encoded. Further, encoded data is decoded to generate an atlas image of an alpha component, atlas inverse transformation is performed on the atlas image of the alpha component to generate alpha images of 3D data, encoded data is decoded to generate an atlas image of RGB components, and the atlas inverse transformation is performed on the atlas image of the RGB components to generate an RGB image of the 3D data. The present disclosure can be applied to, for example, an information processing apparatus, an electronic apparatus, an information processing method, a program, or the like.

## Description

### Technical Field

The present disclosure relates to an information processing apparatus and method, more particularly, to an information processing apparatus and method that are capable of suppressing an increase in transmission capacity.

### Background Art

From the past, as a method of expressing a three-dimensional shape of an object, there has been NeRF (Representing Scenes as Neural Radiance Fields for View Synthesis) in which a radiance field corresponding to a space including the object is generated, and the radiance field is approximated by a neural network (see, for example, Non-Patent Literatures 1 to 3). In NeRF, spatial information of a 3D object is expressed by an MLP (Multi Layer Perceptron).

There has also been a method called MPI (Multi Plane Image) in which a three-dimensional space is expressed by being divided into a plurality of layers (2D images). In order to speed up rendering processing of NeRF, a method called NeX in which the MLP is transformed into this MPI for handling has been devised (see, for example, Non-Patent Literature 4). The MPI is an image group in which a plurality of 2D images are arranged in layers, and 3D data can be handled as 2D images.

### Citation List

### Non-Patent Literature

Non-Patent Literature 1: Ben Mildenhall, Pratul P. Srinivasan, Matthew Tancik, Jonathan T. Barron, Ravi Ramamoorthi, Ren Ng, "NeRF: Representing scenes as neural radiance fields for view synthesis", ECCV 2020, 2020/3/19
Non-Patent Literature 2: Thomas Muller, Alex Evans, Christoph Schied, Alexander Keller, "Instant neural graphics primitives with a multiresolution hash encoding", arXiv preprint arXiv:2201.05989, 2022/1/16
Non-Patent Literature 3: Ricardo Martin-Brualla, Noha Radwan, Mehdi S. M. Sajjadi, Jonathan T. Barron, Alexey Dosovitskiy, Daniel Duckworth, "NeRF in the Wild: Neural Radiance Fields for Unconstrained Photo Collections", https://arxiv.org/abs/2008.02268, 2020/8/5
Non-Patent Literature 4: Suttisak Wizadwongsa, Pakkapon Phongthawee, Jiraphon Yenphraphai, "NeX: Real-time View Synthesis with Neural Basis Expansion", arXiv: 2103.05606v2 [cs.CV] 12 Apr 2021

### Disclosure of Invention

### Technical Problem

However, 3D data that uses the MPI as in NeX has a large amount of data, and thus there has been a fear that, when transmitting the 3D data, a transmission capacity thereof will increase.

The present disclosure has been made in in view of the circumstances as described above, and aims at enabling an increase in transmission capacity to be suppressed.

### Solution to Problem

An information processing apparatus according to an aspect of the present technology is an information processing apparatus including: a first atlas transformation unit which performs atlas transformation on alpha images of 3D data to generate an atlas image of an alpha component; a first encoding unit which encodes the atlas image of the alpha component; a second atlas transformation unit which performs the atlas transformation on an RGB image of the 3D data to generate an atlas image of RGB components; and a second encoding unit which encodes the atlas image of the RGB components.

An information processing method according to an aspect of the present technology is an information processing method including: performing atlas transformation on alpha images of 3D data to generate an atlas image of an alpha component; encoding the atlas image of the alpha component; performing the atlas transformation on an RGB image of the 3D data to generate an atlas image of RGB components; and encoding the atlas image of the RGB components.

An information processing apparatus according to another aspect of the present technology is an information processing apparatus including: a first decoding unit which decodes encoded data to generate an atlas image of an alpha component; a first atlas inverse transformation unit which performs atlas inverse transformation on the atlas image of the alpha component to generate alpha images of 3D data; a second decoding unit which decodes encoded data to generate an atlas image of RGB components; and a second atlas inverse transformation unit which performs the atlas inverse transformation on the atlas image of the RGB components to generate an RGB image of the 3D data.

An information processing method according to another aspect of the present technology is an information processing method including: decoding encoded data to generate an atlas image of an alpha component; performing atlas inverse transformation on the atlas image of the alpha component to generate alpha images of 3D data; decoding encoded data to generate an atlas image of RGB components; and performing the atlas inverse transformation on the atlas image of the RGB components to generate an RGB image of the 3D data.

In the information processing apparatus and method according to the aspect of the present technology, atlas transformation is performed on alpha images of 3D data to generate an atlas image of an alpha component, the atlas image of the alpha component is encoded, the atlas transformation is performed on an RGB image of the 3D data to generate an atlas image of RGB components, and the atlas image of the RGB components is encoded.

In the information processing apparatus and method according to the another aspect of the present technology, encoded data is decoded to generate an atlas image of an alpha component, atlas inverse transformation is performed on the atlas image of the alpha component to generate alpha images of 3D data, encoded data is decoded to generate an atlas image of RGB components, and the atlas inverse transformation is performed on the atlas image of the RGB components to generate an RGB image of the 3D data.

### Brief Description of Drawings

[Fig. 1] A diagram for explaining 3D data that uses an MPI.
[Fig. 2] A diagram for explaining the 3D data that uses an MPI.
[Fig. 3] A diagram for explaining NeX.
[Fig. 4] A diagram for explaining NeX.
[Fig. 5] A diagram for explaining NeX.
[Fig. 6] A diagram for explaining NeX.
[Fig. 7] A diagram showing an example of a 3D data transmission method.
[Fig. 8] A diagram for explaining a use of atlas transformation.
[Fig. 9] A diagram showing an example of atlas transformation of NeX data.
[Fig. 10] A diagram showing an example of a state where a mask image is generated.
[Fig. 11] A diagram showing an example of a state of atlas transformation of an RGB_base image that uses the mask image.
[Fig. 12] A diagram showing an example of a state of atlas transformation of an RGB_view image that uses the mask image.
[Fig. 13] A diagram showing a configuration example of a bit stream.
[Fig. 14] A diagram showing an example of the atlas transformation of NeX data.
[Fig. 15] A diagram showing a configuration example of a bit stream.
[Fig. 16] A diagram for explaining an example of a state where atlas transformation information is generated.
[Fig. 17] A diagram showing a configuration example of a bit stream.
[Fig. 18] A system diagram showing a main configuration example of an information processing system.
[Fig. 19] A flowchart for explaining an example of a flow of transmission processing.
[Fig. 20] A flowchart for explaining an example of a flow of reproduction processing.
[Fig. 21] A block diagram showing a main configuration example of an encoding device.
[Fig. 22] A flowchart for explaining an example of a flow of encoding processing.
[Fig. 23] A block diagram showing a main configuration example of a decoding device.
[Fig. 24] A flowchart for explaining an example of a flow of decoding processing.
[Fig. 25] A block diagram showing a main configuration example of the encoding device.
[Fig. 26] A flowchart for explaining an example of a flow of the encoding processing.
[Fig. 27] A block diagram showing a main configuration example of the decoding device.
[Fig. 28] A flowchart for explaining an example of a flow of the decoding processing.
[Fig. 29] A block diagram showing a main configuration example of the encoding device.
[Fig. 30] A block diagram showing a main configuration example of the decoding device.
[Fig. 31] A flowchart for explaining an example of a flow of the decoding processing.
[Fig. 32] A block diagram showing a main configuration example of a computer.

### Modes for Carrying Out the Invention

Hereinafter, modes for carrying out the present disclosure (hereinafter, will be referred to as embodiments) will be described. It is noted that descriptions will be given in the following order.
1. Literatures that support technical contents and technical terms, etc.
2. Transmission capacity of 3D data that uses MPI
3. Encoding/decoding that uses atlas transformation
4. First embodiment (information processing system)
5. Notes

### <1. Literatures that support technical contents and technical terms, etc.>

The range disclosed in the present technology includes not only contents described in the embodiments but also contents described in the following non-patent literatures and the like that have already been known at the time of the application, contents of other literatures that are referenced in the following non-patent literatures, and the like.

| | |
|---|---|
| Non-Patent Literature 1: | (described above) |
| Non-Patent Literature 2: | (described above) |
| Non-Patent Literature 3: | (described above) |
| Non-Patent Literature 4: | (described above) |

In other words, the contents described in the non-patent literatures described above, the contents of other literatures that are referenced in the non-patent literatures described above, and the like also become grounds in determining supporting conditions.

### <2. Transmission capacity of 3D data that uses MPI>

### <NeRF>

From the past, as a method of expressing a three-dimensional shape of an object, there has been NeRF (Representing Scenes as Neural Radiance Fields for View Synthesis) in which a radiance field (Radiance Fields) corresponding to a space including the object is generated, and the radiance field is approximated by a neural network.

The radiance field expresses, by colors of directions at positions in a space including the object and an opacity at each position in the space, a scene in that space. Here, the opacity is an index that indicates a presence of some kind of an object, and can also be considered as a density. In other words, a shape of a three-dimensional space can be expressed by obtaining a radiation field in which a density of coordinates where an object exists becomes high. NeRF approximates such a radiation field by the neural network. In other words, NeRF is a technology that generates a radiation field corresponding to a 3D object, approximates the radiation field by the neural network, and uses the neural network for rendering.

In NeRF, an object in a three-dimensional space is captured from different positions, a camera pose of the captured images is calculated, and the captured images and the camera pose are used in learning of the neural network, to thus generate a neural network (MLP (Multi Layer Perceptron)) that approximates a radiation field expressing a three-dimensional shape of the object. During inference, pose information (will also be referred to as viewpoint information) of a new desired viewpoint is input to this neural network so as to obtain a rendering image of that new viewpoint.

### <NeX>

There has also been a method called MPI (Multi Plane Image) in which a three-dimensional space is expressed by being divided into a plurality of layers (2D images). In order to speed up rendering processing of NeRF, Non-Patent Literature 4 has proposed a method called NeX in which an MLP is transformed into this MPI for handling. The MPI is an image group in which a plurality of 2D images are arranged in layers, and 3D data can be handled as 2D images.

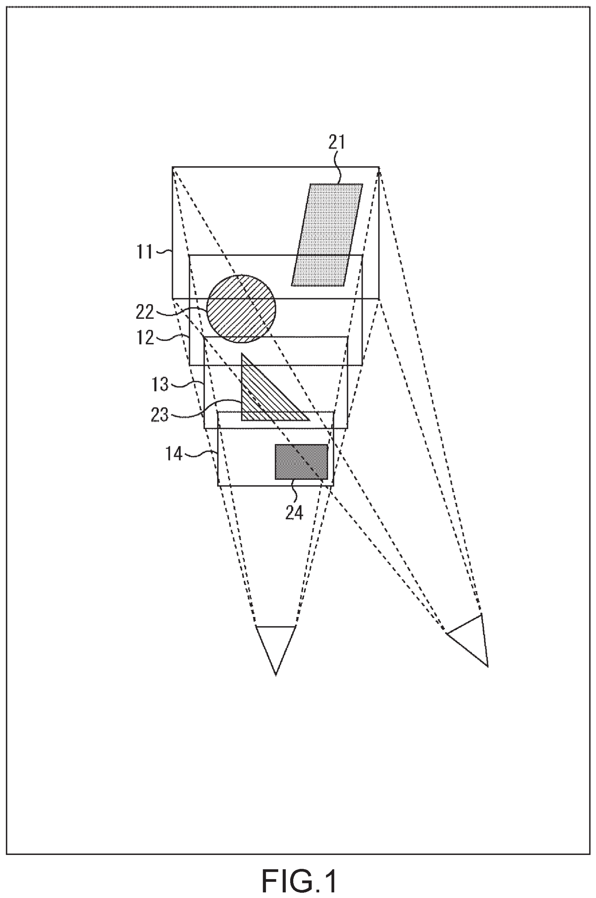

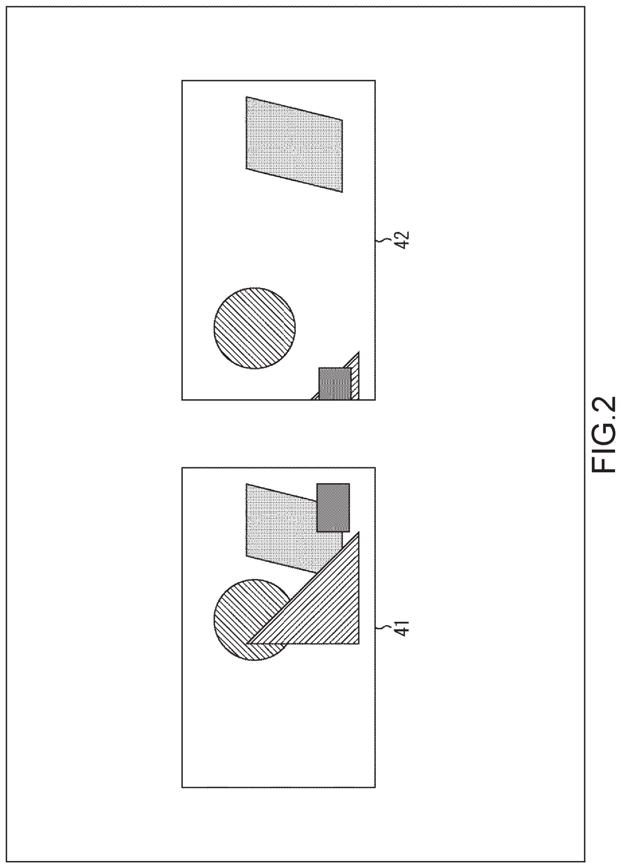

In the MPI, a plurality of layers (2D planes) are formed in a three-dimensional space like layers 11 to 14 shown in Fig. 1, for example, and an object is expressed in each of the layers. The MPI is constituted of a plurality of RGBA images. This RGBA image is generated by learning multi-view images using DNN (Deep Neural Network). In a rendering image at a viewpoint position, a synthesis result (superimposition result) of the objects in the respective layers as viewed from that viewpoint is shown. For example, as shown in Fig. 1, it is assumed that an object 21 exists in the layer 11, an object 22 exists in the layer 12, an object 23 exists in the layer 13, and an object 24 exists in the layer 14. In the rendering image, these objects are superimposed in a positional relationship as viewed from the viewpoint position. A rendering image 41 in Fig. 2 shows an example of the rendering image at a viewpoint 31 in Fig. 1, and a rendering image 42 shows the rendering image at a viewpoint 32 in Fig. 1. By the overlapping manner of the objects 21 to 24 changing in accordance with the viewpoint position in this manner, a stereoscopic effect of the three-dimensional space (the three-dimensional shapes of the objects) is expressed.

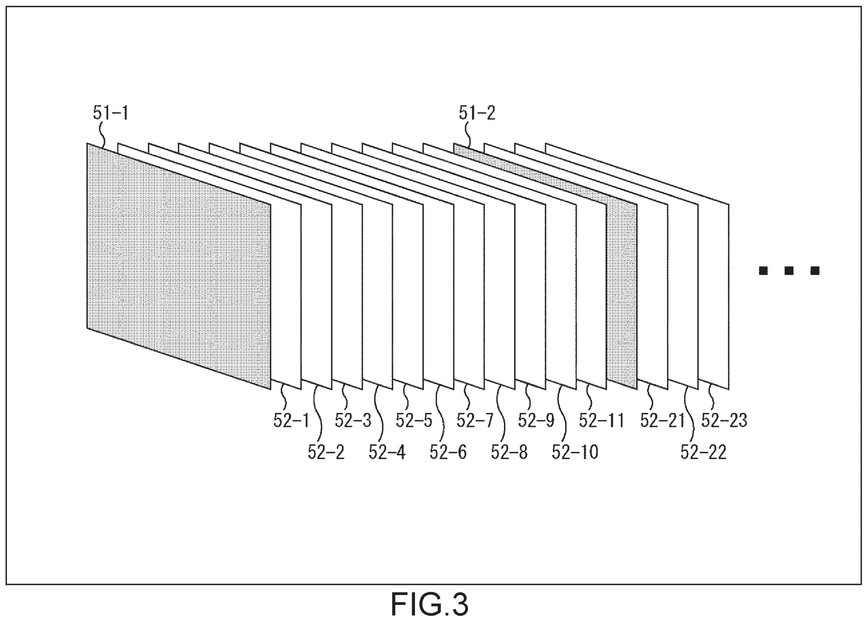

In NeX, an MLP of NeRF is transformed into such an MPI (will also be referred to as a NeX MPI) for handling. In other words, a three-dimensional space is expressed by a plurality of layers. An example of a layer configuration of NeX is shown in Fig. 3. In the case of the NeX MPI, a plurality of main layers 51 are formed as exemplified by a main layer 51-1, a main layer 51-2, ..., and further, a plurality of sublayers 52 are formed between the main layers 51 as exemplified by sublayers 52-1 to 52-11 and sublayers 52-21 to .... In other words, in a layer group expressing a three-dimensional space, some of the layers provided at an interval of a predetermined number of layers are formed as the main layers 51, and the remaining layers between the main layers 51 are formed as the sublayers 52.

The number of layers, the number of main layers, and the number of sublayers between the main layers in this layer group are all arbitrary. For example, a three-dimensional space at a certain time (one scene) may be expressed by 192 layers in which one layer out of 12 layers (that is, a total of 16 layers) is set as the main layer, and the remaining 176 layers are set as the sublayers. In this case, one layer out of 12 consecutive layers in the layer group is set as the main layer, and the remaining 11 layers are set as the sublayers. Alternatively, for example, the number of main layers may be set to 32. In this case, the number of layers in the layer group expressing one scene becomes 384, though of course is not limited to these examples.

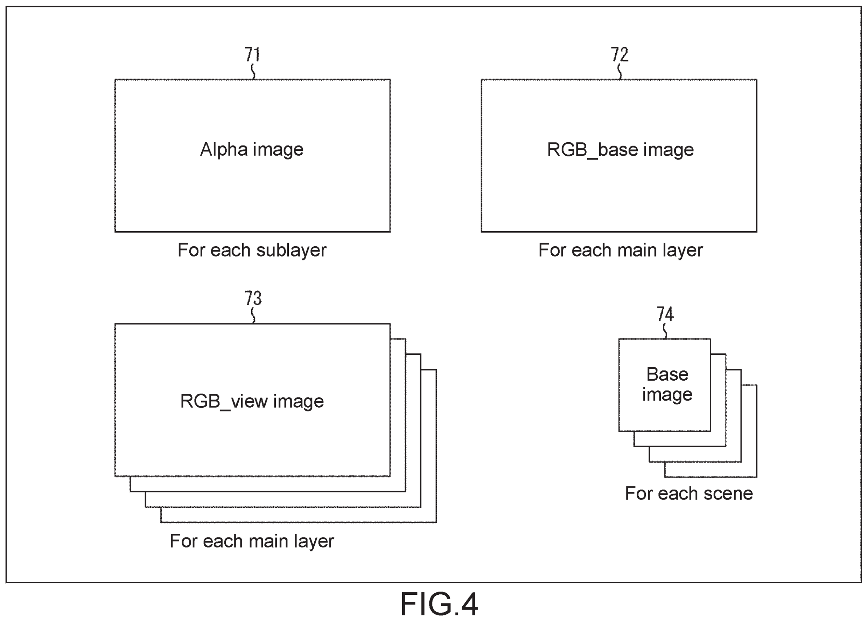

In the case of NeX, data is constituted of an alpha image 71, an RGB_base image 72, an RGB_view image 73, and a basis image 74 as shown in Fig. 4. The alpha image 71 is distribution information of alpha components indicating a presence of an object in a single layer in the layer group expressing a three-dimensional space. In other words, the alpha image 71 indicates where the object exists in the layer. This alpha image 71 is generated for each sublayer. That is, this alpha image 71 is generated for all of the layers (the main layers 51 and sublayers 52 shown in Fig. 3) of the layer group expressing the three-dimensional space.

The RGB_base image 72 and the RGB_view image 73 are each information indicating a distribution of RGB components indicating color information of an object in the plurality of consecutive layers in the layer group. It is noted that the RGB_base image and the RGB_view image are also collectively referred to as RGB images.

The RGB_base image 72 is color distribution information that does not depend on a viewpoint angle. The RGB_base image 72 is constituted of a single image. In other words, the RGB_base image 72 is color distribution information in which color components when viewed from the front of the image are strong.

The RGB_view image 73 is color distribution information that depends on the viewpoint angle. The RGB_view image 73 is constituted of a plurality of images. The plurality of images are color distribution information in which color components when viewed from different viewpoints are strong. For example, the RGB_view image 73 is constituted of four images: an image k0 with strong color components when viewed from above, an image with strong color components when viewed from below, an image with strong color components when viewed from the left side, and an image with strong color components when viewed from the right side.

The RGB_base image 72 and the RGB_view image 73 are generated for each of the main layers, that is, every plurality of consecutive layers in the layer group. For example, in the case of Fig. 3, one RGB_base image 72 and one RGB_view image 73 are generated with respect to the main layer 51-1 and the sublayers 52-1 to 52-11. That is, the RGB_base image 72 indicates color distribution information for 12 consecutive layers, and one image is generated for the 12 layers. Similarly, the RGB_view image 73 indicates color distribution information for 12 consecutive layers, and four images are generated for the 12 layers.

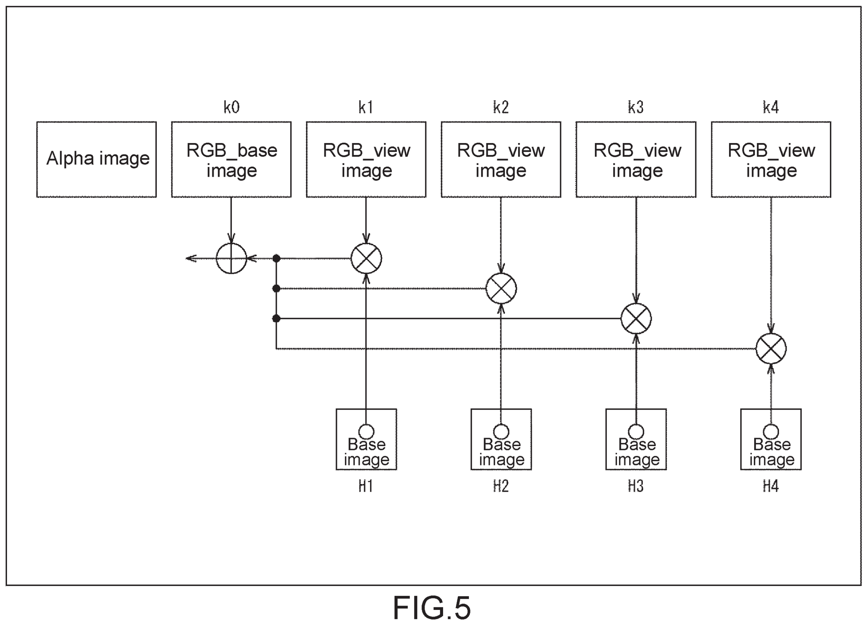

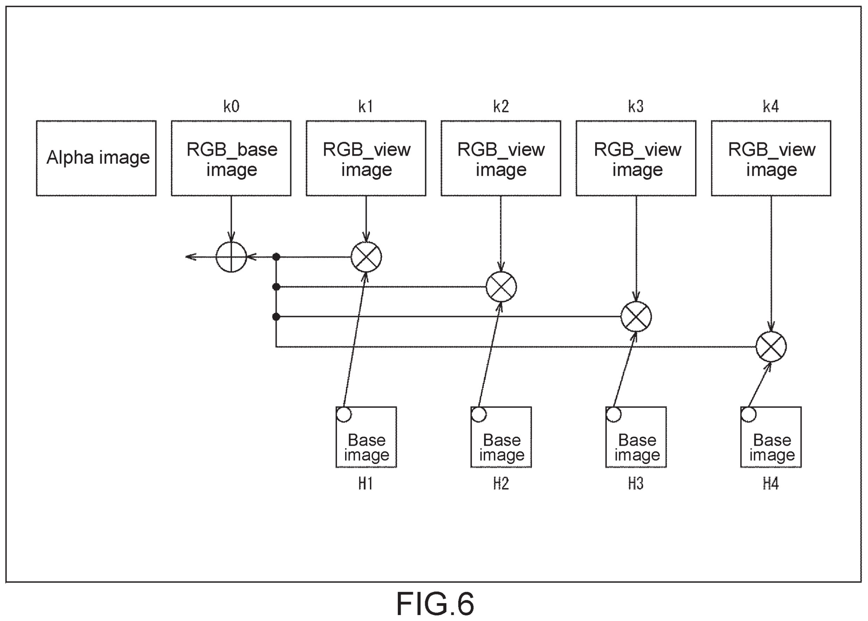

The basis image 74 is constituted of the same number of images as the RGB_view image 73. For example, when four RGB_view images 73 are formed as described above, the number of basis images 74 to be formed is also four. The basis images 74 respectively correspond to the different RGB_view images 73, and each indicate a blend ratio of the corresponding RGB_view image 73 for each viewpoint direction. That is, a pixel position of the basis image 74 is determined according to the viewpoint direction, and the RGB_view image 73 corresponding to that basis image 74 is blended at the blend ratio indicated as the pixel value. For example, when the viewpoint is the front, as shown in Fig. 5, the RGB_view images 73 (k1 to k4) are multiplied by the blend ratios indicated as central pixel values of the basis images 74 (H1 to H4) respectively corresponding thereto, and those multiplication results and the RGB_base image 72 (k0) are added. Moreover, when the viewpoint is the upper left, as shown in Fig. 6, the RGB_view images 73 (kl to k4) are multiplied by the blend ratios indicated as upper left pixel values of the basis images 74 (H1 to H4) respectively corresponding thereto, and those multiplication results and the RGB_base image 72 (k0) are added.

Expressiveness of the NeX MPI can be improved by varying the RGB portions in accordance with the viewpoint direction in this manner. It is noted that by generating the alpha image for each of the sublayers and the RGB images for each of the main layers, it is possible to suppress an increase in amount of data while improving expressiveness, and realize efficient learning.

### <MPI transmission>

As an MPI transmission method, there is MPEG Immersive Video (MIV) coding standard, which is being standardized by MPEG (Moving Picture Experts Group). In MPEG-I Part 12: Immersive Video (MIV), standardization of metadata requisite for decoding and synthesis accompanying pre-processing is performed in a framework for encoding and transmitting a multi-view video constituted of a large number of textures and depths after performing pre-processing for performing viewpoint reduction and/or data reduction such as pixel pruning.

There is also MPEG-I Part 5-2nd edition (V3C (Visual Volumetric Video-based Coding)) which describes details of MIV atlas processing and video processing. Immersive Video has several degrees of freedom of viewpoint, and there are several expression methods for realizing this.

As described above, the MPI has a configuration in which a three-dimensional space is sliced into a plurality of layers (images). Therefore, each layer is sparse data. Therefore, the amount of data can be reduced by reducing pixels (atlas) before transmission. Information related to the atlas (cutout position and/or the like) is specified in MIV/V3C.

In atlas transformation, portions where Transparency (Alpha component) is zero are deleted. The remaining portions (non-zero regions) are cut into rectangles and arranged in an atlas image. The data transformed into an atlas in this manner is transmitted as atlas transformation information indicating a content of the atlas transformation and an atlas image indicating a transformation result of the atlas transformation (that is, an atlas image in which the non-zero regions are arranged).

In the case of the MPI, basic information of the atlas transformation information is stored in V3C_VPS. Further, data of the atlas transformation information is stored in V3C_AD. Furthermore, atlas images (atlas images of alpha components and atlas images of RGB components) are stored in V3C_AVD.

V3C_VPS can transmit up to 63 pieces of atlas transformation information (basic information). This basic information includes accompanying information of an atlas image, such as identification information (ID), a size of the atlas image in a width direction (horizontal direction), and a size of the atlas image in a height direction (vertical direction).

It is noted that the association of the atlas image with the alpha image and/or RGB image is performed using the identification information (vuh_atlas_id) in v3c_unit_header().

In addition, the atlas transmission method is standardized in MPEG-I Part 5. The non-zero regions can be rotated to be arranged in the atlas image.

### <Amount of data of NeX MPI>

The amount of data of the NeX MPI has been large. As an example, it is assumed that 3D moving image data of 60 FPS is used, the resolution of alpha images and RGB images is 4K, the main layers constituting a scene are 32 layers each provided every 12 layers, and the number of basis images (Basis) is four. It is also assumed that data of the NeX MPI (4K32L) in this case is transmitted and reproduced instantly (in real time) at a transmission destination. In that case, the required transmission capacity is 524 GB/s. Further, as another example, it is assumed that 3D moving image data of 60 FPS is used, the resolution of alpha images and RGB images is HD, the main layers constituting a scene are 16 layers each provided every 12 layers, and the number of basis images (Basis) is four. It is also assumed that data of the NeX MPI (HD16L) in this case is transmitted and reproduced instantly (in real time) at the transmission destination. In that case, the required transmission capacity is 83 GB/s. It is noted that in the present specification, the transmission capacity indicates an amount of data that can be transmitted per second through a transmission path (which may include a communication medium, a data bus, an information processing unit, and the like). It is difficult to secure such a transmission capacity, and thus there has been a fear that reproduction processing will fail. Therefore, there has been a demand to reduce the transmission capacity of the NeX MPI.

It is noted that not only NeX but also any 3D data that uses the MPI like NeX has similar problems. That is, 3D data that uses the MPI like NeX has a large amount of data, and there has been a demand to reduce the transmission capacity.

### <3. Encoding/decoding that uses atlas transformation>

### <Method 1>

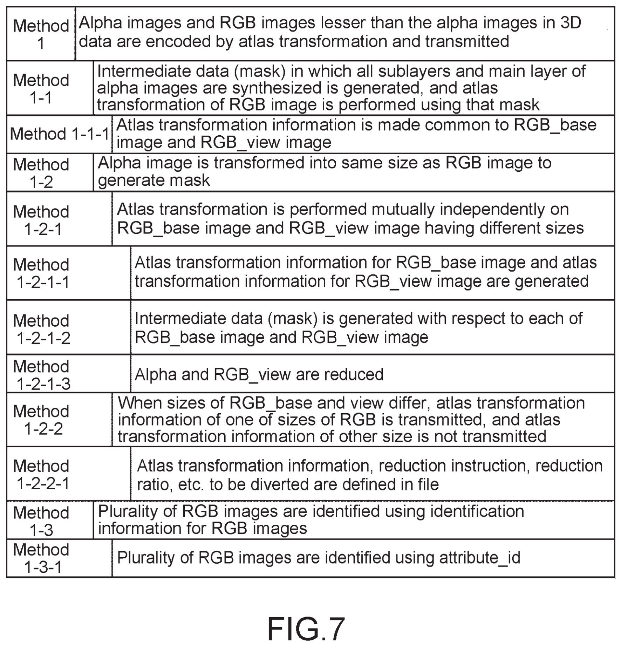

In this regard, as shown on the top row of the table in Fig. 7, alpha images and RGB images lesser than the alpha images in 3D data are subjected to atlas transformation to be encoded, and are then transmitted (Method 1).

For example, a first information processing apparatus includes: a first atlas transformation unit which performs atlas transformation on alpha images of 3D data to generate an atlas image of an alpha component; a first encoding unit which encodes the atlas image of the alpha component; a second atlas transformation unit which performs the atlas transformation on an RGB image of the 3D data to generate an atlas image of RGB components; and a second encoding unit which encodes the atlas image of the RGB components.

Further, a first information processing method includes: performing atlas transformation on alpha images of 3D data to generate an atlas image of an alpha component; encoding the atlas image of the alpha component; performing the atlas transformation on an RGB image of the 3D data to generate an atlas image of RGB components; and encoding the atlas image of the RGB components.

Further, the first information processing apparatus includes: a first decoding unit which decodes encoded data to generate an atlas image of an alpha component; a first atlas inverse transformation unit which performs atlas inverse transformation on the atlas image of the alpha component to generate alpha images of 3D data; a second decoding unit which decodes encoded data to generate an atlas image of RGB components; and a second atlas inverse transformation unit which performs the atlas inverse transformation on the atlas image of the RGB components to generate an RGB image of the 3D data.

Furthermore, a second information processing method includes: decoding encoded data to generate an atlas image of an alpha component; performing atlas inverse transformation on the atlas image of the alpha component to generate alpha images of 3D data; decoding encoded data to generate an atlas image of RGB components; and performing the atlas inverse transformation on the atlas image of the RGB components to generate an RGB image of the 3D data.

It is noted that the alpha image is distribution information of the alpha component indicating a presence of an object in a single layer in a layer group expressing a three-dimensional space. The RGB image is information indicating a distribution of the RGB components indicating color information of the object in a plurality of consecutive layers in the layer group. The 3D data includes, for the three-dimensional space, the alpha image for each of the single layers and the RGB image for every plurality of consecutive layers. Further, the atlas transformation is processing of arranging, in the atlas image, a non-zero region included in the single alpha image or a non-zero region included in the RGB image, that corresponds to a non-zero region included in one or a plurality of the alpha images, and the atlas inverse transformation is inverse processing of the atlas transformation.

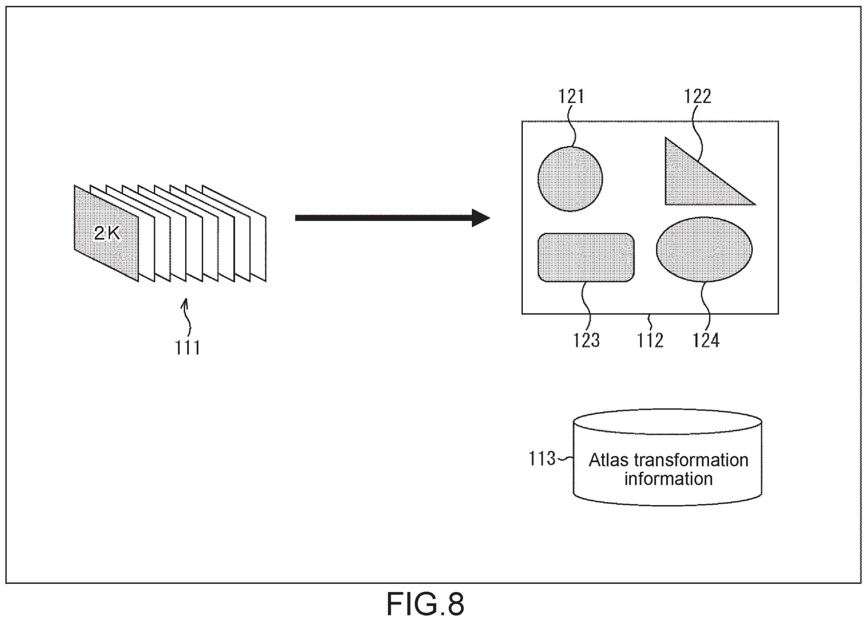

For example, as shown in Fig. 8, a non-zero region is extracted from each layer of 3D data 111 (alpha image and/or RGB image) constituted of a plurality of layers and arranged in an atlas image 112. In the present specification, such processing will be referred to as atlas transformation. Further, inverse processing of such processing will be referred to as atlas inverse transformation. Similar to the MPI described above, the alpha images and/or RGB images of the layers of the NeX MPI are generally sparse. Therefore, a plurality of non-zero regions can be arranged in one atlas image.

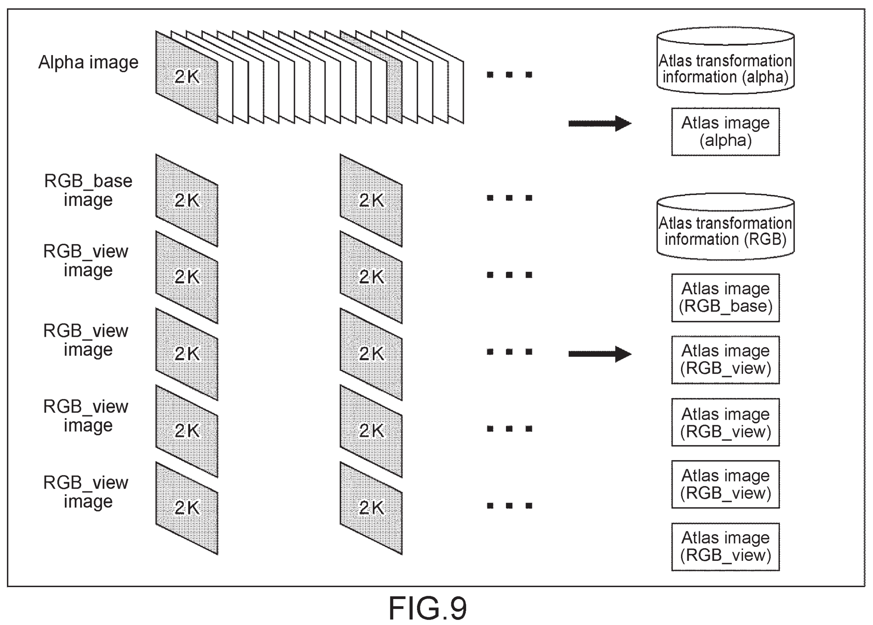

The first atlas transformation unit of the first information processing apparatus performs such atlas transformation on the alpha images to generate an atlas image of the alpha component (atlas image (alpha)) as shown in **Fig.** 9. Then, the first encoding unit of the first information processing apparatus encodes the atlas image (alpha) using a 2D encoding method to generate encoded data. Similarly, the second atlas transformation unit of the first information processing apparatus performs such atlas transformation on the RGB images to generate atlas images of the RGB components (atlas images (RGB)) as shown in **Fig. 9****.** Then, the second encoding unit of the first information processing apparatus encodes the atlas images (RGB) using the 2D encoding method to generate encoded data. These pieces of encoded data are transmitted to the second information processing apparatus.

Then, the first decoding unit of the second information processing apparatus decodes the encoded data of the atlas image (alpha) to generate (restore) the atlas image (alpha). Then, the first atlas inverse transformation unit of the second information processing apparatus performs atlas inverse transformation on the atlas image (alpha) to generate (restore) the alpha images. Similarly, the second decoding unit of the second information processing apparatus decodes the encoded data of the atlas images (RGB) to generate (restore) the atlas images (RGB). Then, the second atlas inverse transformation unit of the second information processing apparatus performs the atlas inverse transformation on the atlas images (RGB) to generate (restore) the RGB images.

With such a configuration, the transmission capacity required for data transmission of the NeX MPI (4K32L) can be reduced from 524 GB/s to 7 GB/s (to about 1/75). Further, the transmission capacity required for data transmission of the NeX MPI (HD16L) can be reduced from 83 GB/s to 1.1 GB/s (to about 1/75). In other words, it is possible to suppress an increase of the transmission capacity required for transmission of 3D data that uses the MPI as in NeX.

It is noted that although the NeX MPI is taken as an example in the present specification, the present technology (Method 1) can be applied to any 3D data as long as it is 3D data that uses the MPI. In other words, the application of the present technology is not limited to the NeX MPI. In addition, the encoding method to which the present technology (Method 1) is applied only needs to be an encoding method that involves atlas transformation, and may be V3C or other encoding methods.

### <Method 1-1>

When this Method 1 is applied, as shown on the second row from the top of the table in Fig. 7, intermediate data (mask) in which all sublayers and main layer of the alpha images (all layers of the "plurality of consecutive layers" that correspond to one RGB image) are synthesized may be generated, and that mask may be used to perform atlas transformation of one RGB image that corresponds to the "plurality of consecutive layers" (Method 1-1).

For example, the first information processing apparatus described above may further include a mask image generation unit which generates a mask image in which non-zero regions of the alpha images of the plurality of consecutive layers are synthesized, and the second atlas transformation unit may perform the atlas transformation on the RGB image using that mask image.

Since the alpha component is information indicating a presence of an object, the non-zero regions of the alpha images only need to be extracted and subjected to the atlas transformation. A portion of the RGB component corresponding to the object corresponds to the non-zero region of the alpha component. In other words, the second atlas transformation unit only needs to basically extract the same region as the alpha image from the RGB image and perform the atlas transformation. However, as shown in Fig. 9, the alpha image is formed for each of the sublayers (for each single layer), and the RGB image is formed for each of the main layers (every plurality of consecutive layers). In other words, one RGB image includes color distribution information for the plurality of (for example, 12) consecutive layers. In other words, one RGB image corresponds to a plurality of (for example, 12) consecutive alpha images.

Therefore, there has been a fear that, if a region that is the same as the non-zero region of one alpha image is simply extracted from the RGB image and subjected to the atlas transformation, color distribution information of other layers out of the plurality of consecutive layers (for example, information for the remaining 11 layers in the case where the RGB image is formed every 12 layers) will be lost. In other words, there has been a fear that, in the case of 3D data that uses an MPI like the NeX MPI and has lesser RGB images than alpha images, information of the RGB images will be lost by the atlas transformation, and quality of the 3D data (image quality of a rendering image) will thus be lowered.

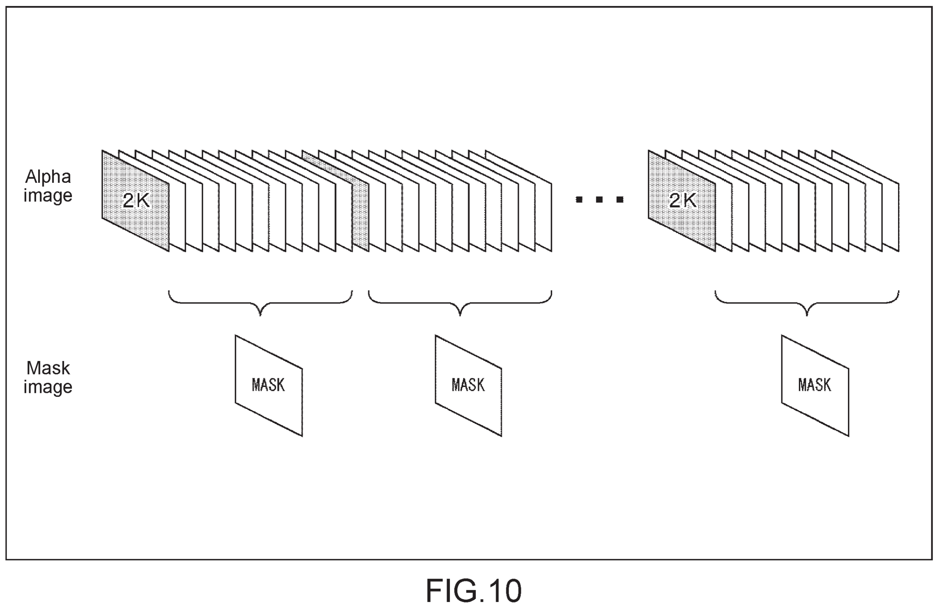

In this regard, the mask image generation unit of the first information processing apparatus synthesizes all layers of the "plurality of consecutive layers" corresponding to one RGB image to generate the intermediate data (mask image) as shown in Fig. 10. For example, when the RGB image is formed every 12 layers, the alpha images are synthesized (superimposed) every 12 layers, and thus a mask image in which the alpha images for the 12 layers are superimposed is generated. As a result, the same number of mask images as the number of layers of the RGB images are generated. For example, when a three-dimensional space is expressed by 192 layers, 16 mask images are generated.

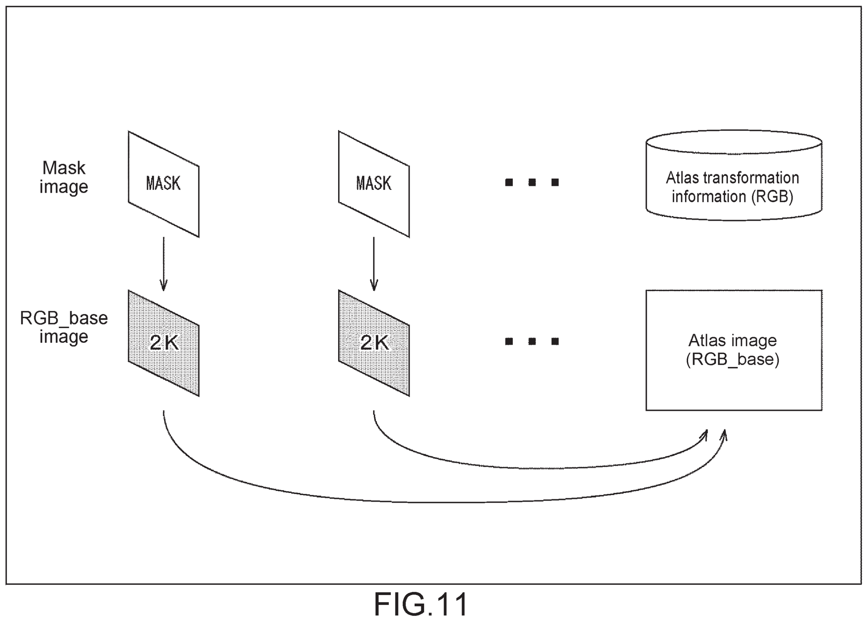

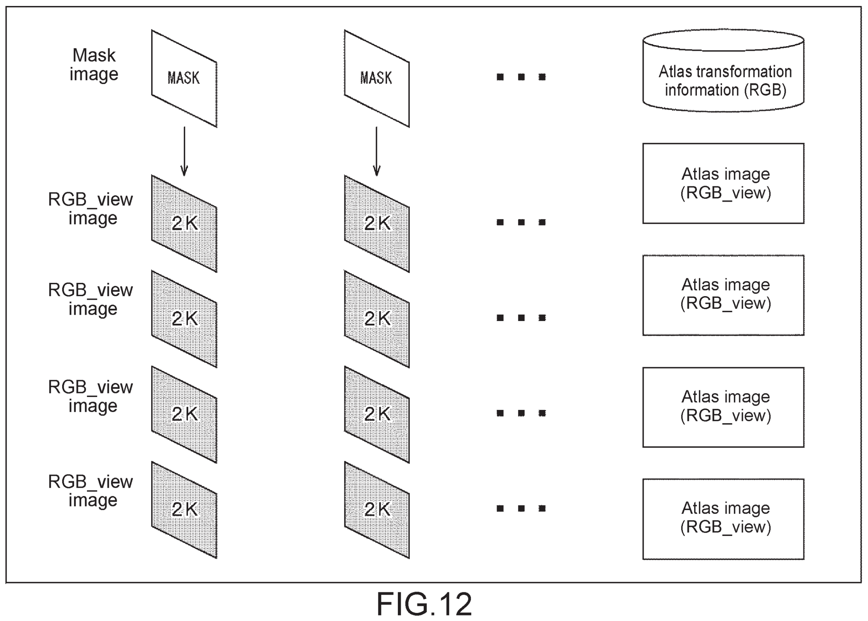

Then, as shown in Figs. 11 and 12, atlas transformation is performed on the RGB image using this mask image to generate an atlas image (RGB). Each of the mask images is obtained by superimposing 12 alpha images, and therefore includes non-zero regions for 12 layers (the non-zero regions for 12 layers are superimposed). Therefore, by applying this mask image, it is possible to extract color distribution information of an object for 12 layers from the RGB image, and suppress the loss of the information as described above. In other words, it is possible to suppress lowering of quality of 3D data (image quality of a rendering image) due to the atlas transformation.

### <Method 1-1-1>

When this Method 1-1 is applied, atlas transformation information may be made common to the RGB_base image and the RGB_view image as shown on the third row from the top of the table in Fig. 7 (Method 1-1-1).

For example, in the first information processing apparatus described above, the RGB image may include an RGB_base image indicating a distribution of an RGB_base component out of the RGB components, and an RGB_view image indicating a distribution of an RGB_view component out of the RGB components. Furthermore, the second atlas transformation unit may perform atlas transformation on the RGB_base image and the RGB_view image to generate atlas images thereof, and generate atlas transformation information common to the RGB_base component and the RGB_view component. It is noted that the atlas transformation information may be information indicating a content of the atlas transformation.

For example, in the second information processing apparatus described above, the RGB image may include an RGB_base image indicating a distribution of an RGB_base component out of the RGB components, and an RGB_view image indicating a distribution of an RGB_view component out of the RGB components. Further, the second decoding unit may decode encoded data to generate an atlas image of the RGB_base component and an atlas image of the RGB_view component. Furthermore, the second atlas inverse transformation unit may perform atlas inverse transformation on the atlas image of the RGB_base component and the atlas image of the RGB_view component using the atlas transformation information common to the RGB_base component and the RGB_view component. Furthermore, the atlas transformation information may be information indicating a content of the atlas transformation.

As shown in Fig. 8, the second atlas transformation unit of the first information processing apparatus generates atlas transformation information 113 indicating a content of the atlas transformation together with the atlas image 112. This "content of the atlas transformation" may include, for example, information on where and how in an atlas image which regions (for example, regions 121 to 124 in Fig. 8) extracted from what layers are to be arranged, and/or the like. Such atlas transformation information 113 is used in the atlas inverse transformation by the second atlas inverse transformation unit of the second information processing apparatus. The atlas inverse transformation is inverse processing of the atlas transformation. In other words, the atlas inverse transformation is processing of extracting each of the regions (for example, regions 121 to 124 in Fig. 8) arranged in the atlas image by the atlas transformation, and generating (restoring) the original alpha images and/or RGB image. Therefore, by performing such atlas inverse transformation based on the atlas transformation information indicating a content of the atlas transformation, the second atlas inverse transformation unit can correctly generate (restore) the alpha images and/or RGB image.

When the RGB_base image and the RGB_view image exist as the RGB images as in the example shown in Fig. 9, the atlas transformation unit performs the atlas transformation on each of the RGB_base image and the RGB_view image. In these atlas transformations, the atlas transformation unit may extract the same regions from the RGB_base image and the RGB_view image and arrange the regions at the same position in the atlas image. In that case, the atlas transformation unit may generate the atlas transformation information common to the RGB_base component and the RGB_view component (atlas transformation information (RGB)) as shown in Figs. 11 and 12. With such a configuration, a redundancy between the atlas transformation information in the case of generating both the atlas transformation information of the RGB_base component and the atlas transformation information of the RGB_view component can be reduced. Therefore, it is possible to suppress an increase in the amount of data and suppress an increase of the transmission capacity required for data transmission.

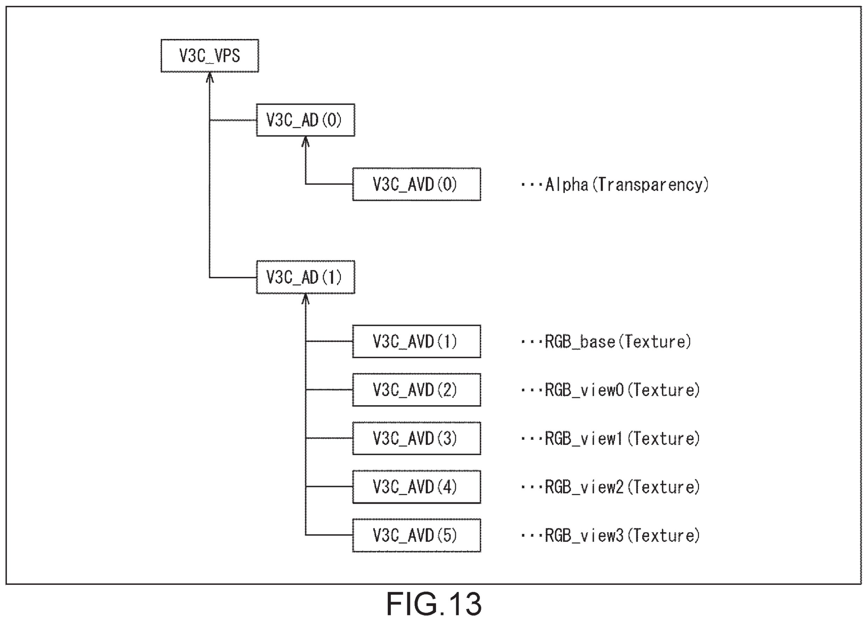

In that case, as shown in Fig. 13, for example, the atlas transformation information (RGB) may be stored in V3C_AD(1) common to the RGB_base component and RGB_view component in a V3C bit stream. In addition, the atlas image (RGB_base) and the atlas image (RGB_view) may be stored in V3C_AVD associated with that V3C_AD(1) .

### <Method 1-2>

When the Method 1 described above is applied, as shown on the fourth row from the top of the table in Fig. 7, the alpha images may be transformed into the same size as the RGB image to generate a mask (Method 1-2).

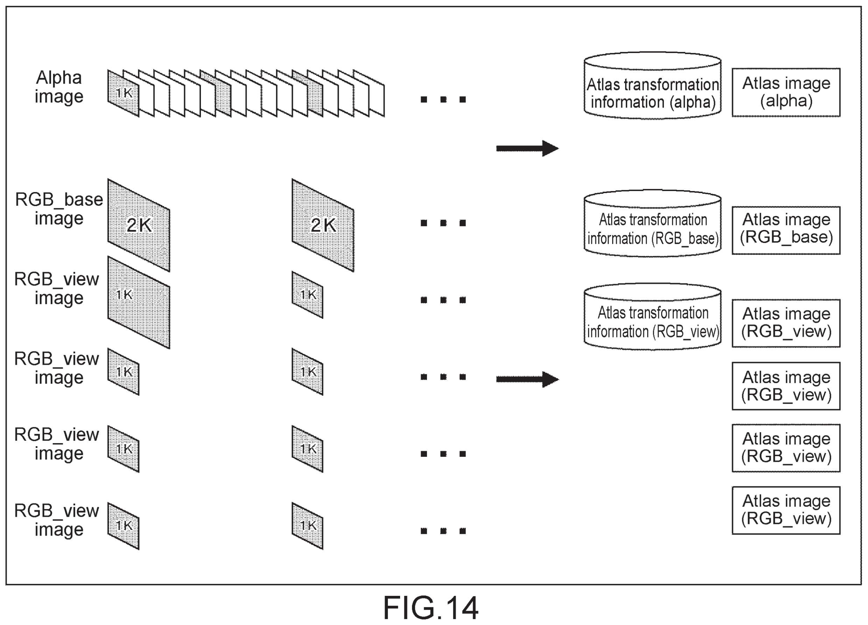

The size (resolution) may differ between the alpha image and the RGB image. In the example shown in Fig. 14, the size (resolution) of the alpha image and the RGB_view image is a so-called 1K size, and the size (resolution) of the RGB_base image is a so-called 2K size. There has been a fear that, when the size (resolution) differs between the alpha image and the RGB image in this manner, the size (resolution) of the mask image generated from the alpha images as described above will differ from the size (resolution) of the RGB image and will thus not be applicable.

In this regard, by transforming the alpha images into the same size as the RGB image, the atlas transformation can be performed correctly. Therefore, an increase of the transmission capacity required for data transmission can be suppressed.

### <Method 1-2-1>

When this Method 1-2 is applied, as shown on the fifth row from the top of the table in Fig. 7, the atlas transformation may be performed mutually independently on the RGB_base image and the RGB_view image having different sizes (Method 1-2-1).

For example, in the first information processing apparatus described above, the RGB image may include an RGB_base image indicating a distribution of an RGB_base component out of the RGB components, and an RGB_view image indicating a distribution of an RGB_view component out of the RGB components. Further, the second atlas transformation unit may perform the atlas transformation mutually independently on the RGB_base image and the RGB_view image having different sizes.

For example, in the second information processing apparatus described above, the RGB image may include an RGB_base image indicating a distribution of an RGB_base component out of the RGB components, and an RGB_view image indicating a distribution of an RGB_view component out of the RGB components. Further, the RGB_base image and the RGB_view image may have different sizes. Furthermore, the second decoding unit may decode each of encoded data of the atlas image of the RGB_base component and encoded data of the atlas image of the RGB_view component. The second atlas inverse transformation unit may perform the atlas inverse transformation mutually independently on the atlas image of the RGB_base component and the atlas image of the RGB_view component.

Furthermore, as in the example shown in Fig. 14, the size (resolution) may differ between the RGB_base image and the RGB_view image. In such a case, it may be difficult to generate common atlas transformation information in the atlas transformation. It may also be difficult to correctly perform the atlas inverse transformation using the common atlas transformation information.

In this regard, as described above, the atlas transformation may be performed mutually independently on the RGB_base image and the RGB_view image. Further, the atlas inverse transformation may be performed mutually independently on the atlas image of the RGB_base component and the atlas image of the RGB_view component.

With such a configuration, the atlas transformation and the atlas inverse transformation of the RGB_base component and the RGB_view component can be performed correctly.

### <Method 1-2-1-1>

When this Method 1-2-1 is applied, atlas transformation information for the RGB_base image and atlas transformation information for the RGB_view image may be generated as shown on the sixth row from the top of the table in Fig. 7 (Method 1-2-1-1).

For example, in the first information processing apparatus described above, the second atlas transformation unit may perform the atlas transformation on the RGB_base image to generate atlas transformation information of the RGB_base component. In addition, the second atlas transformation unit may perform the atlas transformation on the RGB_view image to generate atlas transformation information of the RGB_view component. Further, the atlas transformation information may be information indicating a content of the atlas transformation.

For example, in the second information processing apparatus described above, the second atlas inverse transformation unit may perform the atlas inverse transformation on the atlas image of the RGB_base component using the atlas transformation information of the RGB_base component. In addition, the second atlas transformation unit may perform the atlas inverse transformation on the atlas image of the RGB_view component using the atlas transformation information of the RGB_view component. Further, the atlas transformation information may be information indicating a content of the atlas transformation.

For example, as shown in Fig. 14, atlas transformation information (RGB_base) and atlas transformation information (RGB_view) may be generated by the atlas transformation. With such a configuration, the atlas transformation of the RGB_base component and the RGB_view component can be performed mutually independently. In addition, the atlas inverse transformation may be performed using the atlas transformation information (RGB_base) and the atlas transformation information (RGB_view). The atlas inverse transformation of the RGB_base component and the RGB_view component can be performed mutually independently.

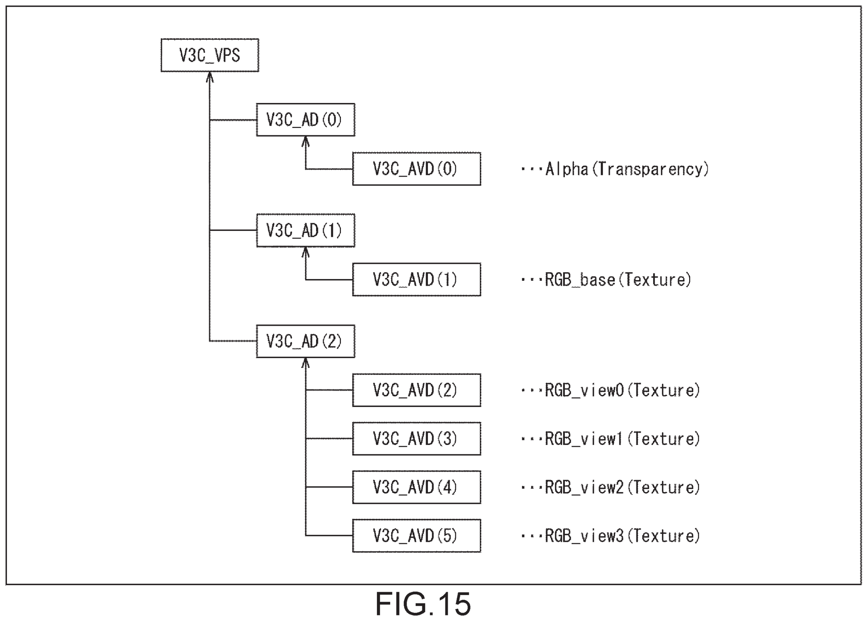

In this case, as shown in Fig. 15, for example, in a V3C bit stream, the atlas transformation information (RGB_base) may be stored in V3C_AD(1) for the RGB_base component, and the atlas transformation information (RGB_view) may be stored in V3C_AD(2) for the RGB_view component (may be stored in different V3C_ADs). Further, the atlas image (RGB_base) may be stored in V3C_AVD associated with V3C_AD(1). Moreover, the atlas image (RGB_view) may be stored in V3C_AVD associated with V3C_AD(2).

### <Method 1-2-1-2>

When the Method 1-2-1 described above is applied, intermediate data (mask) may be generated for each of the RGB_base image and the RGB_view image as shown on the seventh row from the top of the table in Fig. 7 (Method 1-2-1-2).

For example, the first information processing apparatus described above may further include a mask image generation unit which generates, with respect to each of the RGB_base image and the RGB_view image, a mask image in which non-zero regions of the alpha images of the plurality of consecutive layers are synthesized. Further, in the first information processing apparatus, the second atlas transformation unit may perform the atlas transformation on the RGB_base image using the mask image for the RGB_base image. In addition, the second atlas transformation unit may perform the atlas transformation on the RGB_view image using the mask image for the RGB_view image.

When the RGB_base image and the RGB_view image have different sizes as in the example shown in Fig. 14, at least one of the sizes differs from that of the alpha image. Therefore, there has been a fear that the mask image generated from the alpha images will not be able to be applied in its original size. In this regard, the intermediate data (mask) may be generated for each of the RGB_base image and the RGB_view image. By individually generating the mask images in this manner, it is possible to generate mask images that match the sizes of both the RGB_base image and the RGB_view image. Therefore, the atlas transformation can be performed correctly.

### <Method 1-2-1-3>

Further, when Method 1-2-1 described above is applied, alpha and RGB_view may be reduced as shown on the eighth row from the top of the table in Fig. 7 (Method 1-2-1-3).

For example, the first information processing apparatus described above may further include a reduction processing unit which reduces the alpha images and the RGB_view image. In addition, in the first information processing apparatus, the first atlas transformation unit may perform the atlas transformation on the reduced alpha images. Further, the second atlas transformation unit may perform the atlas transformation mutually independently on the RGB_base image and the reduced RGB_view image.

Furthermore, the second information processing apparatus described above may further include an enlargement processing unit which enlarges the alpha images and the RGB_view image.

As in the example shown in Fig. 9, with respect to the alpha images, the RGB_base image, and the RGB_view images having the same size (for example, 2K), the sizes of the alpha images and the RGB_view images may be reduced (for example, reduced to 1K) to perform the atlas transformation for encoding as in the example shown in Fig. 14. By reducing the images for transmission and enlarging the images after transmission to restore the images to their original sizes in this manner, the amount of data during transmission can be reduced. Therefore, an increase of the transmission capacity required for data transmission can be additionally suppressed.

It is noted that since the alpha image is information indicating a presence of an object, even if the resolution of the alpha image is lowered, an effect on subjective image quality of a rendering image is relatively small. Further, since the RGB_view image is blended at a blend ratio that depends on the direction, the effect on the subjective image quality of a rendering image is relatively small as compared to the RGB_base image. Therefore, by reducing the alpha images and the RGB_view images as described above, it is possible to additionally suppress an increase of the transmission capacity required for data transmission while suppressing lowering of the subjective image quality of a rendering image.

### <Method 1-2-2>

Further, when Method 1-2 described above is applied, if the sizes of RGB_base and view differ, atlas transformation information of one of the sizes of RGB may be transmitted as shown on the ninth row from the top of the table in Fig. 7. Further, it is also possible not to transmit atlas transformation information of the other size (Method 1-2-2).

For example, in the first information processing apparatus described above, the RGB image may include an RGB_base image indicating a distribution of an RGB_base component out of the RGB components, and an RGB_view image indicating a distribution of an RGB_view component out of the RGB components. Further, the RGB_base image and the RGB_view image may have different sizes. Furthermore, in the first information processing apparatus, the second atlas transformation unit may perform the atlas transformation on the RGB_base image and the RGB_view image to generate atlas transformation information of the RGB_base component or the RGB_view component. It is noted that the atlas transformation information may be information indicating a content of the atlas transformation.

For example, in the second information processing apparatus described above, the RGB image may include an RGB_base image indicating a distribution of an RGB_base component out of the RGB components, and an RGB_view image indicating a distribution of an RGB_view component out of the RGB components. Further, the RGB_base image and the RGB_view image may have different sizes. Furthermore, the second decoding unit may decode each of encoded data of the atlas image of the RGB_base component and encoded data of the atlas image of the RGB_view component. Moreover, the second atlas inverse transformation unit may perform the atlas inverse transformation on the atlas image of the RGB_base component and the atlas image of the RGB_view component using the atlas transformation information of the RGB_base component or the RGB_view component.

For example, the second information processing apparatus described above may further include a reduction processing unit which reduces the atlas transformation information of the RGB_base component or the RGB_view component.

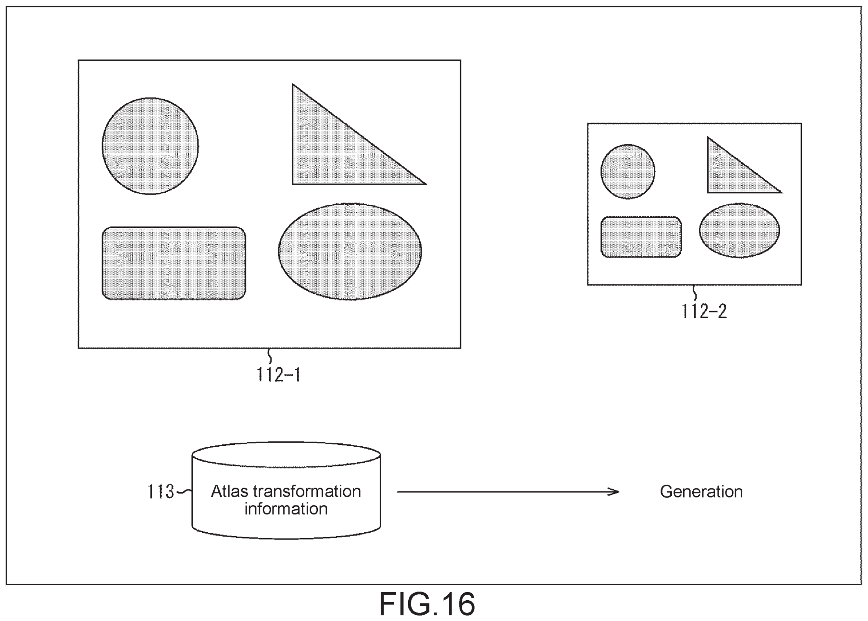

Even when the sizes of the RGB_base image and the RGB_view image differ as in the example shown in Fig. 14, the atlas transformation of both images is performed using a mask image generated from the same alpha images, so an arrangement of one atlas image and an arrangement of the other atlas image are similar as in the example shown in Fig. 16. That is, the size of one of the atlas transformation information can be transformed so as to match with that of the other atlas transformation information. Therefore, the size of one of the atlas transformation information may be transformed to generate the other atlas transformation information. That is, it is possible to transmit one of the atlas transformation information (without transmitting the other atlas transformation information), and transform the size of the transmitted one of the atlas transformation information (scale transformation) during atlas inverse transformation of the other atlas transformation information, to generate and apply the other atlas transformation information. With such a configuration, the amount of data during transmission can be reduced. Therefore, an increase of the transmission capacity required for data transmission can be additionally suppressed.

It is noted that the atlas transformation information to be transmitted may be for the RGB_base component or may be for the RGB_view component. Further, the atlas transformation information for a larger image size may be transmitted, or the atlas transformation information for a smaller image size may be transmitted.

When transmitting the atlas transformation information for a larger image size, the atlas transformation information for a smaller image size may be generated by reducing the transmitted atlas transformation information at the transmission destination. With such a configuration, it is possible to transmit atlas transformation information of higher accuracy, and perform the atlas inverse transformation more accurately.

Further, when transmitting the atlas transformation information for a smaller image size, the atlas transformation information for a larger image size may be generated by enlarging the transmitted atlas transformation information at the transmission destination. With such a configuration, the amount of data during transmission can be additionally reduced. Therefore, an increase of the transmission capacity required for data transmission can be additionally suppressed.

### <Method 1-2-2-1>

Further, when Method 1-2 described above is applied, the atlas transformation information, a reduction instruction, a reduction ratio, and the like to be diverted may be defined in a file as shown on the 10-th row from the top of the table in Fig. 7.

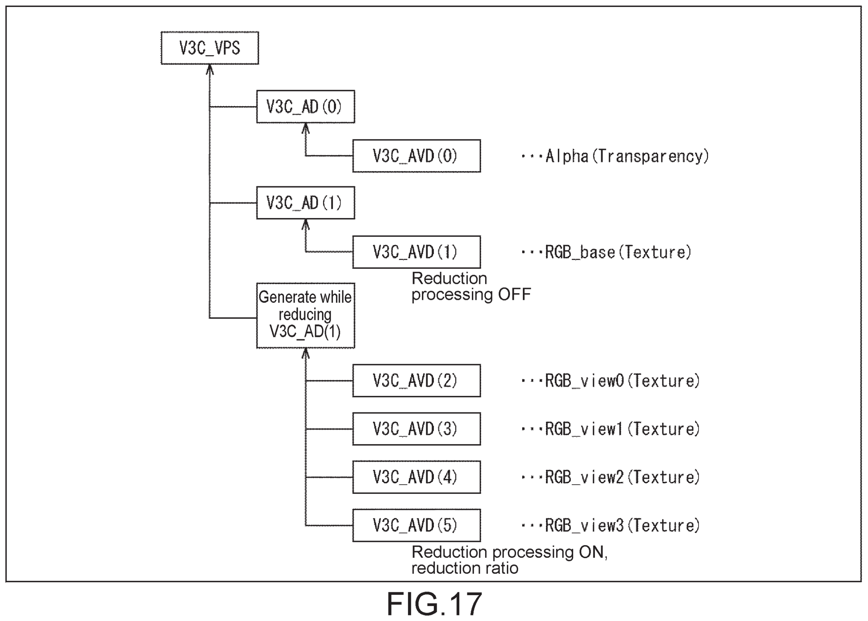

For example, it is assumed that, as in the example shown in Fig. 14, the RGB_view image is smaller than the RGB_base images, and the atlas transformation information (RGB_base) is reduced to generate the atlas transformation information (RGB_view). In that case, as shown in Fig. 17, for example, in the V3C bit stream, flag information indicating whether or not to perform reduction processing, information indicating a reduction ratio when performing the reduction processing, and the like may be stored in V3C_AVD that stores the atlas image (RGB_base) and the atlas image (RGB_view). That is, these pieces of information may be stored in the bit stream and transmitted. Then, when the reduction processing is performed, V3C_AD associated with that V3C_AVD may be generated by reducing the other V3C_AD (V3C_AD(1)).

### <Method 1-3 and Method 1-3-1>

When Method 1 described above is applied, a plurality of RGB images may be identified using identification information for RGB images as shown on the 11-th row from the top of the table in Fig. 7 (Method 1-3). Further, when this Method 1-3 is applied, the plurality of RGB images may be identified using attribute_id as shown on the bottom row of the table in Fig. 7 (Method 1-3-1).

For example, in the first information processing apparatus described above, the RGB image may include an RGB_base image indicating a distribution of an RGB_base component out of the RGB components, and an RGB_view image indicating a distribution of an RGB_view component out of the RGB components. Further, the second atlas transformation unit may perform the atlas transformation on the RGB_base image and the RGB_view image to generate atlas images thereof. Furthermore, the first information processing apparatus may further include a multiplexing unit which multiplexes, using identification information, encoded data of the atlas image of the alpha component, encoded data of the atlas image of the RGB_base component, and encoded data of the atlas image of the RGB_view component, to generate a bit stream. Moreover, in the first information processing apparatus described above, the identification information may be information for identifying the RGB_base component and the RGB_view component.

For example, in the second information processing apparatus described above, the RGB image may include an RGB_base image indicating a distribution of an RGB_base component out of the RGB components, and an RGB_view image indicating a distribution of an RGB_view component out of the RGB components. Further, the second information processing apparatus may further include a demultiplexing unit which demultiplexes a bit stream to generate encoded data of the atlas image of the alpha component, encoded data of the atlas image of the RGB_base component, and encoded data of the atlas image of the RGB_view component.

For example, in the second information processing apparatus described above, the demultiplexing unit may demultiplex the bit stream using the identification information for identifying the RGB_base component and the RGB_view component.

When there are a plurality of RGB images as in the NeX MPI, it is necessary to identify each of the RGB images. In this regard, as described above, the plurality of RGB images may be identified using the identification information for the RGB images. It is noted that any specification may be used for this identification information. For example, identification information (attribute_id) for identifying an attribute may be used as this identification information. For example, in the case of a V3C bit stream, vuh_attribute_index stored in a V3C unit header may be used as this identification information.

By using such identification information, it becomes easy to identify each RGB, and an increase in the load of reproduction processing (decoding processing) can be suppressed.

### <Regarding methods>

Each of the methods described above can be applied in combination with other methods as long as no contradictions arise. For example, Method 1-3 shown in the table of Fig. 7 may be applied in combination with Method 1-1 and/or Method 1-2. Further, the plurality of methods out of Methods 1-2-1-1 to 1-2-1-3 shown in the table of Fig. 7 may be applied in combination. Of course, other combinations are also possible. Furthermore, the methods shown in Fig. 7 may be applied in combination with other methods.

It is noted that in the descriptions of the present specification, the higher-order methods may include the lower-order methods. In other words, the application of Method 1 may include the application of one or more methods out of Methods 1-1 to 1-3, Method 1-1-1, Methods 1-2-1 and 1-2-2, Method 1-3-1, Methods 1-2-1-1 to 1-2-1-3, and Method 1-2-2-1. Similarly, the application of Method 1-1 may include the application of Method 1-1-1. Similarly, the application of Method 1-2 may include the application of one or more methods out of Methods 1-2-1 and 1-2-2, Methods 1-2-1-1 to 1-2-1-3, and Method 1-2-2-1. Similarly, the application of Method 1-2-1 may include the application of one or more methods out of Methods 1-2-1-1 to 1-2-1-3. Similarly, the application of Method 1-2-2 may include the application of Method 1-2-2-1. Similarly, the application of Method 1-3 may include the application of Method 1-3-1.

Therefore, for example, the case described as "applying Method 1" may include a case of applying one or more methods out of Methods 1-1 to 1-3, Method 1-1-1, Methods 1-2-1 and 1-2-2, Method 1-3-1, Methods 1-2-1-1 to 1-2-1-3, and Method 1-2-2-1.

### <4. First embodiment>

### <Information processing system>

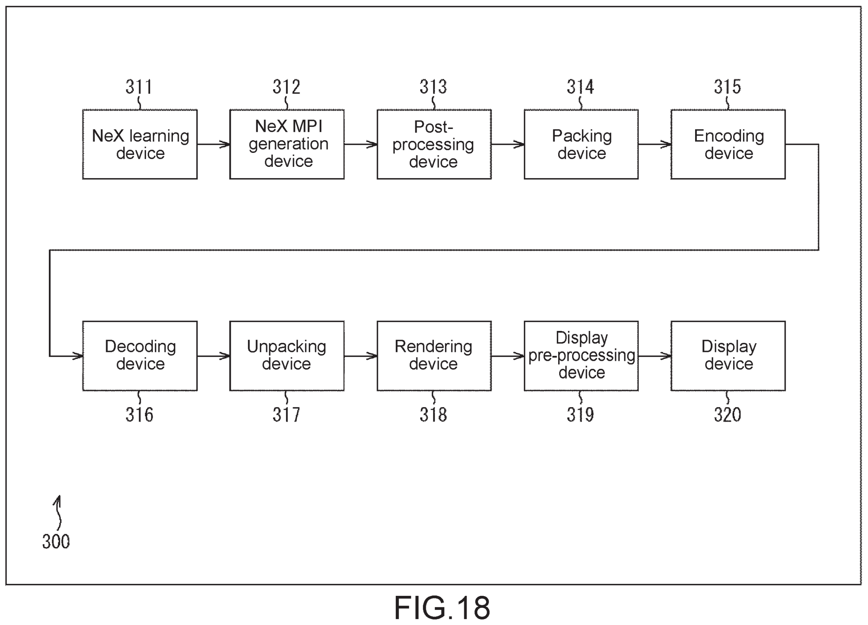

Fig. 18 is a block diagram showing a main configuration example of an information processing system to which the present technology described above in <3. Encoding/decoding that uses atlas transformation> is applied. The information processing system 300 shown in Fig. 18 is a system that generates NeX MPI data, encodes and transmits the data, decodes the data to restore the NeX MPI data, and generates and displays a rendering image.

As shown in Fig. 18, the information processing system 300 includes, as devices on a transmission side (devices on a side that provides NeX data), a NeX learning device 311, a NeX MPI generation device 312, a post-processing device 313, a packing device 314, and an encoding device 315. The information processing system 300 also includes, as devices on a reception side (devices that receive and reproduce NeX data), a decoding device 316, an unpacking device 317, a rendering device 318, a display pre-processing device 319, and a display device 320.

### <Flow of transmission processing>

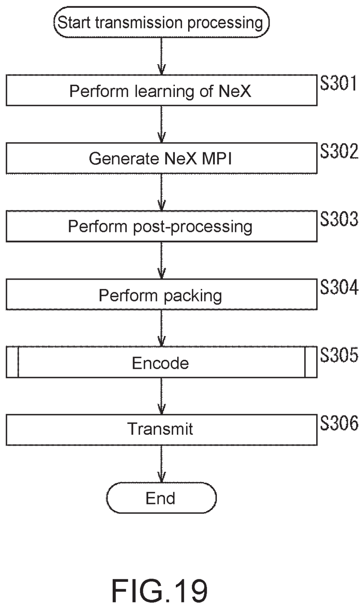

The NeX learning device 311, the NeX MPI generation device 312, the post-processing device 313, the packing device 314, and the encoding device 315 that are the devices on the transmission side (devices on the side that provides NeX data) execute transmission processing and perform processing related to the provision of NeX data. An example of a flow of the transmission processing will be described with reference to the flowchart shown in Fig. 19.

When the transmission processing is started, in Step S301, the NeX learning device 311 performs learning of NeX and sets MLP parameters. In Step S302, the NeX MPI generation device 312 generates a NeX MPI using that MLP. In Step S303, the post-processing device 313 performs post-processing on that NeX MPI. In Step S304, the packing device 314 packs the NeX MPI that has been subjected to the post-processing. In Step S304, the encoding device 315 executes encoding processing to encode the packed NeX MPI, and generates a bit stream. At that time, the encoding device 315 applies Method 1 described above to perform atlas transformation on the alpha images and/or RGB images for encoding. In Step S305, the encoding device 315 transmits the generated bit stream.

### <Flow of reproduction processing>

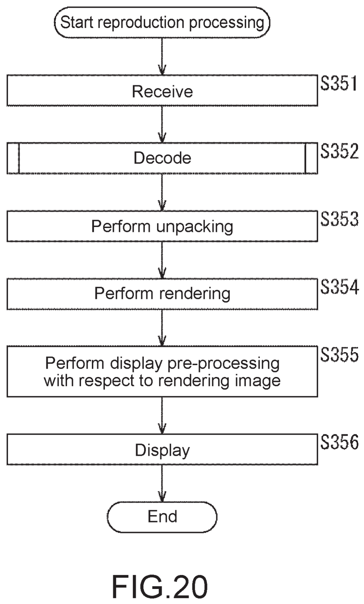

As the devices on the reception side (devices that receive and reproduce NeX data), the decoding device 316, the unpacking device 317, the rendering device 318, the display pre-processing device 319, and the display device 320 execute reproduction processing and perform processing related to the reproduction of NeX data. An example of a flow of the reproduction processing will be described with reference to the flowchart shown in Fig. 20.

When the reproduction processing is started, in Step S351, the decoding device 316 receives the bit stream transmitted from the encoding device 315. In Step S352, the decoding device 316 executes decoding processing to decode the received bit stream, and generates (restores) alpha images and/or RGB images. In Step S353, the unpacking device 317 unpacks the alpha images and/or RGB images. In Step S354, the rendering device 318 performs rendering using the unpacked alpha images and/or RGB images to generate a rendering image of a desired viewpoint. In Step S355, the display pre-processing device 319 performs display pre-processing on that rendering image. In Step S356, the display device 320 displays the rendering image.

By executing each processing in this manner, the information processing system 300 can suppress an increase of the transmission capacity required for transmitting 3D data that uses an MPI as in NeX.

### <Encoding device>

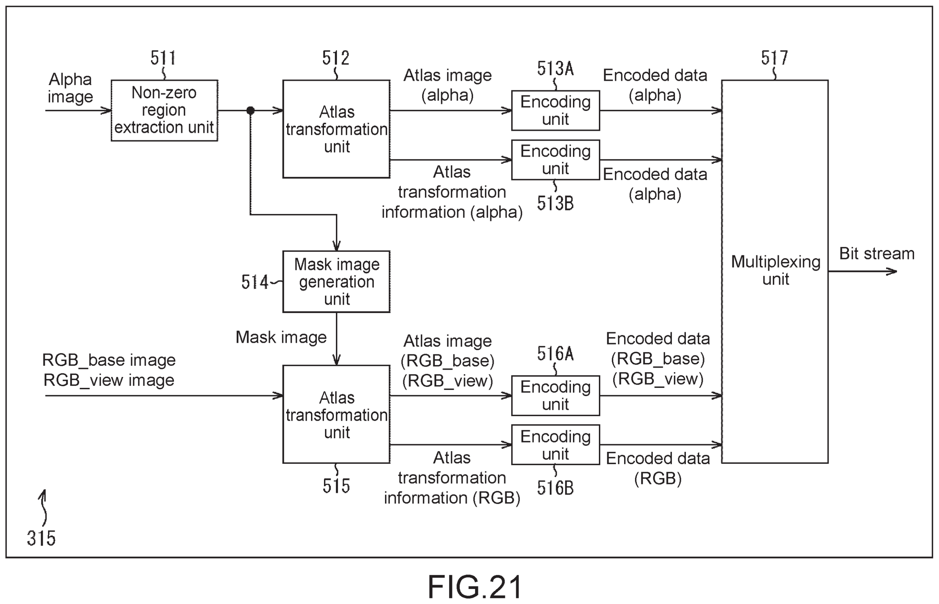

Fig. 21 is a block diagram showing a main configuration example of the encoding device 315. As shown in Fig. 21, the encoding device 315 includes a non-zero region extraction unit 511, an atlas transformation unit 512, an encoding unit 513A, an encoding unit 513B, a mask image generation unit 514, an atlas transformation unit 515, an encoding unit 516A, an encoding unit 516B, and a multiplexing unit 517.

The non-zero region extraction unit 511 performs processing related to extraction of non-zero regions of alpha images. For example, the non-zero region extraction unit 511 may acquire the alpha images supplied to the encoding device 315. Further, the non-zero region extraction unit 511 may extract non-zero regions from the alpha images. Furthermore, the non-zero region extraction unit 511 may supply the extracted non-zero regions to the atlas transformation unit 512. Moreover, the non-zero region extraction unit 511 may supply the alpha images to the mask image generation unit 514. It is noted that the non-zero region extraction unit 511 may execute such processing for each of the layers of the layer group expressing a three-dimensional space.

The atlas transformation unit 512 performs processing related to the atlas transformation of the alpha component. For example, the atlas transformation unit 512 may acquire a non-zero region of the alpha component supplied from the non-zero region extraction unit 511. The atlas transformation unit 512 may perform the atlas transformation of the alpha component and arrange the non-zero region in an atlas image (alpha). Further, the atlas transformation unit 512 may generate atlas transformation information for the atlas transformation. Furthermore, the atlas transformation unit 512 may supply the atlas image (alpha), which is the generated atlas image of the alpha component, to the encoding unit 513A. The atlas transformation unit 512 may also supply atlas transformation information (alpha), which is the generated atlas transformation information of the alpha component, to the encoding unit 513B. It is noted that the atlas transformation unit 512 may execute such processing for each of the layers of the layer group expressing the three-dimensional space.

The encoding unit 513A and the encoding unit 513B perform processing related to encoding of the alpha component. For example, the encoding unit 513A may acquire the atlas image (alpha) supplied from the atlas transformation unit 512. The encoding unit 513A may encode the atlas image (alpha) using a 2D encoding method (for example, JPEG (Joint Photographic Experts Group),MPEG, or the like) to generate encoded data. The encoding unit 513A may supply the generated encoded data of the atlas image (alpha) (will also be referred to as encoded data (alpha)) to the multiplexing unit 517. Further, the encoding unit 513B may acquire the atlas transformation information (alpha) supplied from the atlas transformation unit 512. The encoding unit 513B may encode the atlas transformation information (alpha) to generate encoded data. Any method may be used as the encoding method for this atlas transformation information (alpha). For example, the encoding unit 513B may encode the atlas transformation information (alpha) according to a MIV/V3C standard. The encoding unit 513B may supply the generated encoded data of the atlas transformation information (alpha) (may be included in the encoded data (alpha)) to the multiplexing unit 517. It is noted that the encoding unit 513A and the encoding unit 513B may execute such processing for each of the layers of the layer group expressing the three-dimensional space. It is noted that the encoding unit 513A and the encoding unit 513B will also be referred to as an encoding unit 513.

The mask image generation unit 514 performs processing related to the generation of a mask image. For example, the mask image generation unit 514 may acquire the alpha images supplied from the non-zero region extraction unit 511. Further, the mask image generation unit 514 may generate a mask image using the acquired alpha images. At that time, the mask image generation unit 514 may generate intermediate data (mask image) by synthesizing the alpha images of the respective layers, for every plurality of consecutive layers corresponding to a single RGB image. Further, the mask image generation unit 514 may supply the generated mask image to the atlas transformation unit 515.

The atlas transformation unit 515 performs processing related to the atlas transformation of RGB components. For example, the atlas transformation unit 515 may acquire the RGB images (RGB_base image and RGB_view image) supplied to the encoding device 315. Further, the atlas transformation unit 515 may acquire a mask image supplied from the mask image generation unit 514. Furthermore, the atlas transformation unit 515 may perform the atlas transformation of the RGB components using the mask image and the RGB images. For example, the atlas transformation unit 515 may extract a region corresponding to a non-zero region of the mask image from the RGB_base image, and arrange the region in the atlas image (RGB_base). Further, the atlas transformation unit 515 may extract a region corresponding to a non-zero region of the mask image from the RGB_view image, and arrange the region in the atlas image (RGB_view). Furthermore, the atlas transformation unit 515 may generate atlas transformation information (RGB), which is atlas transformation information common to those atlas transformations. Moreover, the atlas transformation unit 515 may supply the atlas image (RGB_base) that is the generated atlas image of the RGB_base component and the atlas image (RGB_view) that is the generated atlas image of the RGB_view component to the encoding unit 516A. The atlas transformation unit 515 may also supply the atlas transformation information (RGB) that is the generated atlas transformation information of the RGB components to the encoding unit 516B. It is noted that the atlas transformation unit 515 may execute such processing every "plurality of consecutive layers corresponding to a single RGB image" in the layer group expressing the three-dimensional space.

The encoding unit 516A and the encoding unit 516B perform processing related to encoding of the RGB_base component and the RGB_view component (may also be referred to as RGB components). For example, the encoding unit 516A may acquire the atlas image (RGB_base) supplied from the atlas transformation unit 515. The encoding unit 516A may encode the atlas image (RGB_base) using the 2D encoding method (for example, JPEG, MPEG, or the like) to generate encoded data. The encoding unit 516A may supply the generated encoded data of the atlas image (RGB_base) (will also be referred to as encoded data (RGB_base)) to the multiplexing unit 517. Further, the encoding unit 516A may acquire the atlas image (RGB_view) supplied from the atlas transformation unit 515. The encoding unit 516A may encode the atlas image (RGB_view) using the 2D encoding method (for example, JPEG, MPEG, or the like) to generate encoded data. The encoding unit 516A may supply the generated encoded data of the atlas image (RGB_view) (will also be referred to as encoded data (RGB_view)) to the multiplexing unit 517. Further, the encoding unit 516B may acquire the atlas transformation information (RGB) supplied from the atlas transformation unit 515. The encoding unit 516B may encode the atlas transformation information (RGB) to generate encoded data. Any method may be used as the encoding method for this atlas transformation information (RGB). For example, the encoding unit 516B may encode the atlas transformation information (RGB) according to the MIV/V3C standard. The encoding unit 516B may supply the generated encoded data of the atlas transformation information (RGB) (will also be referred to as encoded data (RGB)) to the multiplexing unit 517. It is noted that the encoding unit 516A and the encoding unit 516B may execute the processing every "plurality of consecutive layers corresponding to a single RGB image" in the layer group expressing the three-dimensional space. It is noted that the encoding unit 516A and the encoding unit 516B will also be referred to as an encoding unit 516.

The multiplexing unit 517 performs processing related to multiplexing of data. For example, the multiplexing unit 517 may acquire the encoded data (alpha) (the encoded data of the atlas image (alpha) and the atlas transformation information (alpha)) supplied from the encoding unit 513A and the encoding unit 513B. The multiplexing unit 517 may also acquire the encoded data (RGB_base) and the encoded data (RGB_view) supplied from the encoding unit 516A. The multiplexing unit 517 may also acquire the encoded data of the atlas transformation information (RGB) (encoded data (RGB)) supplied from the encoding unit 516B. Further, the multiplexing unit 517 may multiplex these acquired pieces of information to generate a bit stream. Furthermore, the multiplexing unit 517 may transmit the generated bit stream.

In the encoding device 315 having such a configuration, the present technology described above in <3. Encoding/decoding that uses atlas transformation> may be applied. For example, Method 1 described above may be applied to the encoding device 315. For example, the atlas transformation unit 512 may perform atlas transformation on alpha images of 3D data to generate an atlas image of an alpha component. Further, the encoding unit 513A may encode the atlas image of the alpha component. Further, the atlas transformation unit 515 may perform the atlas transformation on an RGB image of 3D data to generate an atlas image of RGB components. Further, the encoding unit 516A may encode the atlas image of the RGB components.

Further, Method 1-1 described above may be applied to the encoding device 315. For example, the mask image generation unit 514 may generate a mask image in which non-zero regions of alpha images of a plurality of consecutive layers are synthesized. Further, the atlas transformation unit 515 may perform the atlas transformation on the RGB image using the mask image.

Furthermore, Method 1-1-1 described above may be applied to the encoding device 315. For example, the RGB image may include an RGB_base image indicating a distribution of an RGB_base component out of the RGB components, and an RGB_view image indicating a distribution of an RGB_view component out of the RGB components. Further, the atlas transformation unit 515 may perform the atlas transformation on the RGB_base image and the RGB_view image to generate atlas images thereof, and generate atlas transformation information common to the RGB_base component and the RGB_view component.

Further, Method 1-3 described above may be applied to the encoding device 315. Further, Method 1-3-1 described above may be applied to the encoding device 315. For example, the RGB image may include an RGB_base image indicating a distribution of an RGB_base component out of the RGB components, and an RGB_view image indicating a distribution of an RGB_view component out of the RGB components. Further, the atlas transformation unit 515 may perform the atlas transformation on the RGB_base image and the RGB_view image to generate atlas images thereof. Furthermore, the multiplexing unit 517 may multiplex, using identification information, encoded data of the atlas image of the alpha component, encoded data of the atlas image of the RGB_base component, and encoded data of the atlas image of the RGB_view component, to generate a bit stream. Furthermore, the identification information may be information for identifying the RGB_base component and the RGB_view component.

With such a configuration, the encoding device 315 can suppress an increase of the transmission capacity required for transmitting 3D data that uses an MPI as in NeX. It is noted that the processing up to the atlas transformation may be performed when packing the NeX MPI that has been subjected to the post-processing. In other words, the packing device 314 and the encoding device 315 may be integrated.

### <Flow of encoding processing>

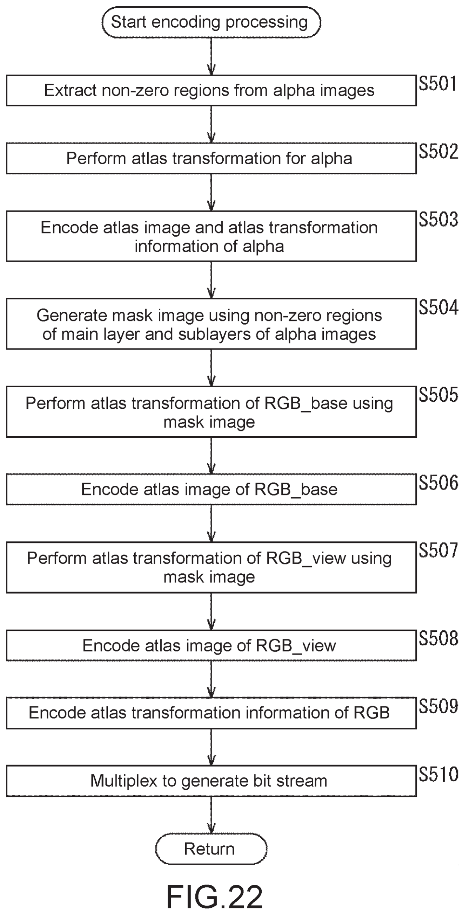

An example of a flow of the encoding processing executed by this encoding device 315 will be described with reference to the flowchart shown in Fig. 22.

When the encoding processing is started, in Step S501, the non-zero region extraction unit 511 extracts non-zero regions from the alpha images. In Step S502, the atlas transformation unit 512 performs atlas transformation for the alpha component to generate an atlas image (alpha) and atlas transformation information (alpha). In Step S503, the encoding unit 513A encodes the atlas image of the alpha component to generate encoded data (alpha). Further, the encoding unit 513B encodes the atlas transformation information of the alpha component to generate encoded data of the atlas transformation information (alpha) (encoded data (alpha)).

In Step S504, the mask image generation unit 514 generates a mask image using the non-zero regions of the main layer and sublayers of the alpha images.

In Step S505, the atlas transformation unit 515 performs the atlas transformation on the RGB_base using the mask image to generate an atlas image (RGB_base). In Step S506, the encoding unit 516A encodes the atlas image of the RGB_base component to generate encoded data (RGB_base).

In Step S507, the atlas transformation unit 515 performs the atlas transformation on the RGB_view using the mask image to generate an atlas image (RGB_view). In Step S508, the encoding unit 516A encodes the atlas image of the RGB_view component to generate encoded data (RGB_view).

It is noted that the atlas transformation unit 515 generates the atlas transformation information (RGB) in the processing of Step S505 or the processing of Step S507. In Step S509, the encoding unit 516B encodes the atlas transformation information of the RGB components to generate encoded data of the atlas transformation information (RGB) (encoded data (RGB)).

In Step S510, the multiplexing unit 517 multiplexes the encoded data (alpha) (the encoded data of the atlas image (alpha) and the atlas transformation information (alpha)), the encoded data (RGB_base), the encoded data (RGB_view), and the encoded data (RGB) to generate a bit stream.

When the processing of Step S509 is ended, the encoding processing is ended, and the processing returns to Fig. 19.

In this manner, in each processing, the present technology described above in <3. Encoding/decoding that uses atlas transformation> may be applied. For example, Method 1 described above may be applied. Further, Method 1-1 described above may be applied. Further, Method 1-1-1 described above may be applied. Further, Method 1-3 described above may be applied. Further, Method 1-3-1 described above may be applied.

By executing each processing in this manner, the encoding device 315 can suppress an increase of the transmission capacity required for transmitting 3D data that uses an MPI as in NeX.

### <Decoding device>

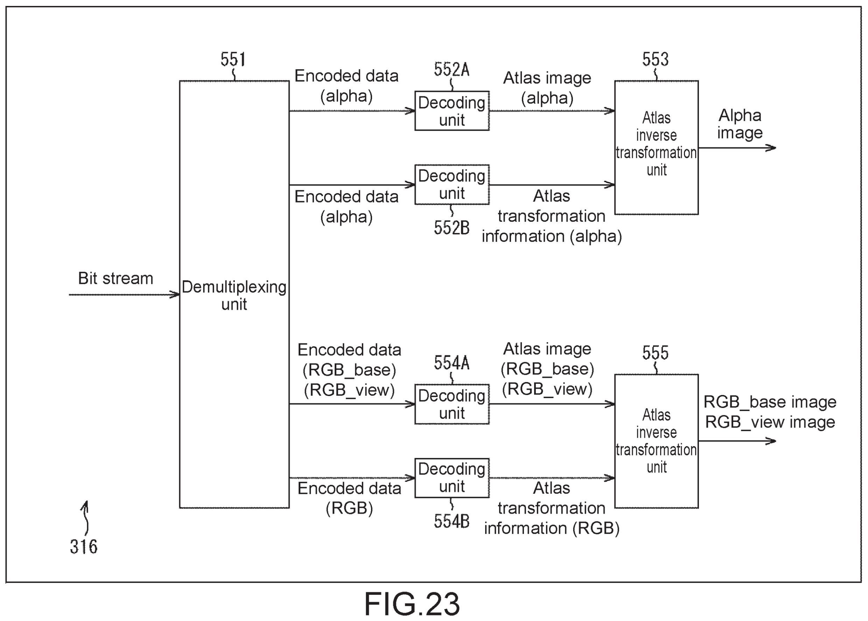

Fig. 23 is a block diagram showing a main configuration example of the decoding device 316. As shown in Fig. 23, the decoding device 316 includes a demultiplexing unit 551, a decoding unit 552A, a decoding unit 552B, an atlas inverse transformation unit 553, a decoding unit 554A, a decoding unit 554B, and an atlas inverse transformation unit 555.

The demultiplexing unit 551 performs processing related to demultiplexing. For example, the demultiplexing unit 551 may acquire a bit stream supplied to the decoding device 316. Further, the demultiplexing unit 551 may demultiplex the bit stream to generate encoded data of the atlas image (alpha) (encoded data (alpha)), encoded data of the atlas transformation information (alpha) (encoded data (alpha)), encoded data of the atlas image (RGB_base) (encoded data (RGB_base)), encoded data of the atlas image (RGB_view) (encoded data (RGB_view)), and encoded data of the atlas transformation information (RGB) (encoded data (RGB)). Further, the demultiplexing unit 551 may supply the encoded data of the atlas image (alpha) (encoded data (alpha)) to the decoding unit 552A. The demultiplexing unit 551 may also supply the encoded data of the atlas transformation information (alpha) (encoded data (alpha)) to the decoding unit 552B. The demultiplexing unit 551 may also supply the encoded data of the atlas image (RGB_base) (encoded data (RGB_base)) and the encoded data of the atlas image (RGB_view) (encoded data (RGB_view)) to the decoding unit 554A. The demultiplexing unit 551 may also supply the encoded data of the atlas transformation information (RGB) (encoded data (RGB)) to the decoding unit 554B.

The decoding unit 552A and the decoding unit 552B perform processing related to the decoding of the alpha component. For example, the decoding unit 552A may acquire the encoded data of the atlas image (alpha) (encoded data (alpha)) supplied from the demultiplexing unit 551. The decoding unit 552A may decode the encoded data (alpha) by the 2D decoding method (for example, JPEG, MPEG, or the like) to generate an atlas image (alpha). The decoding unit 552A may supply the atlas image (alpha) to the atlas inverse transformation unit 553. Further, the decoding unit 552B may acquire the encoded data of the atlas transformation information (alpha) (encoded data (alpha)) supplied from the demultiplexing unit 551. The decoding unit 552B may decode the encoded data (alpha) by the 2D decoding method (for example, JPEG, MPEG, or the like) to generate the atlas transformation information (alpha). This decoding method may be any method. For example, the decoding unit 552B may decode the encoded data (alpha) according to the MIV/V3C standard. Further, the decoding unit 552B may supply the atlas transformation information (alpha) to the atlas inverse transformation unit 553. It is noted that the decoding unit 552A and the decoding unit 552B will also be referred to as a decoding unit 552.

The atlas inverse transformation unit 553 performs processing related to the atlas inverse transformation of the alpha component. For example, the atlas inverse transformation unit 553 may acquire the atlas image (alpha) supplied from the decoding unit 552A. The atlas inverse transformation unit 553 may also acquire the atlas transformation information (alpha) supplied from the decoding unit 552B. Further, the atlas inverse transformation unit 553 may perform the atlas inverse transformation on the atlas image (alpha) using the atlas transformation information (alpha) to generate (restore) the alpha images. The atlas inverse transformation unit 553 may supply the generated alpha images to the unpacking device 317.

The decoding unit 554A and the decoding unit 554B perform processing related to the decoding of RGB components. For example, the decoding unit 554A may acquire the encoded data (RGB_base) and the encoded data (RGB_view) supplied from the demultiplexing unit 551. The decoding unit 554A may decode the encoded data (RGB_base) and the encoded data (RGB_view) by the 2D decoding method (for example, JPEG, MPEG, or the like) to generate an atlas image (RGB_base) and an atlas image (RGB_view). The decoding unit 554A may supply the atlas image (RGB_base) and the atlas image (RGB_view) to the atlas inverse transformation unit 555. The decoding unit 554B may acquire the encoded data (RGB) supplied from the demultiplexing unit 551. The decoding unit 554B may decode the encoded data (RGB) by the 2D decoding method (for example, JPEG, MPEG, or the like) to generate atlas transformation information (RGB). This decoding method may be any method. For example, the decoding unit 554B may decode the encoded data (RGB) according to the MIV/V3C standard. Further, the decoding unit 554B may supply the atlas transformation information (RGB) to the atlas inverse transformation unit 555. It is noted that the decoding unit 554A and the decoding unit 554B will also be referred to as a decoding unit 554.

The atlas inverse transformation unit 555 performs processing related to the atlas inverse transformation of the RGB components. For example, the atlas inverse transformation unit 555 may acquire the atlas image (RGB_base) and the atlas image (RGB_view) supplied from the decoding unit 554A. The atlas inverse transformation unit 555 may also acquire the atlas transformation information (RGB) supplied from the decoding unit 554B. Further, the atlas inverse transformation unit 555 may perform the atlas inverse transformation on the atlas image (RGB_base) and the atlas image (RGB_view) using the atlas transformation information (RGB) to generate (restore) the RGB images (RGB_base image and RGB_view image). The atlas inverse transformation unit 553 may supply the generated RGB images (RGB_base image and RGB_view image) to the unpacking device 317.

In the decoding device 316 having such a configuration, the present technology described above in <3. Encoding/decoding that uses atlas transformation> may be applied. For example, Method 1 described above may be applied to the decoding device 316. For example, the decoding unit 552A may decode encoded data to generate an atlas image of the alpha component. Further, the atlas inverse transformation unit 553 may perform the atlas inverse transformation on the atlas image of the alpha component to generate the alpha images of 3D data. Further, the decoding unit 554A may decode encoded data to generate an atlas image of the RGB components. Further, the atlas inverse transformation unit 555 may perform the atlas inverse transformation on the atlas image of the RGB components to generate the RGB images of the 3D data.

Furthermore, Method 1-1-1 described above may be applied to the decoding device 316. For example, the RGB image may include an RGB_base image indicating a distribution of an RGB_base component out of the RGB components, and an RGB_view image indicating a distribution of an RGB_view component out of the RGB components. Further, the decoding unit 554A may decode encoded data to generate an atlas image of the RGB_base component and an atlas image of the RGB_view component. Furthermore, the atlas inverse transformation unit 555 may perform the atlas inverse transformation on the atlas image of the RGB_base component and the atlas image of the RGB_view component using atlas transformation information common to the RGB_base component and the RGB_view component.

Further, Method 1-3 described above may be applied to the decoding device 316. Further, Method 1-3-1 described above may be applied to the decoding device 316. For example, the RGB image may include an RGB_base image indicating a distribution of an RGB_base component out of the RGB components, and an RGB_view image indicating a distribution of an RGB_view component out of the RGB components. Further, the demultiplexing unit 551 may demultiplex a bit stream to generate encoded data of the atlas image of the alpha component, encoded data of the atlas image of the RGB_base component, and encoded data of the atlas image of the RGB_view component. Further, the demultiplexing unit 551 may demultiplex the bit stream using identification information for identifying the RGB_base component and the RGB_view component.

With such a configuration, the decoding device 316 can suppress an increase of the transmission capacity required for transmitting 3D data that uses an MPI as in NeX. It is noted that the atlas inverse transformation may be performed when unpacking the alpha images and/or RGB images (RGB_base image and RGB_view image). In other words, the decoding device 316 and the unpacking device 317 may be integrated.

### <Flow of decoding processing>

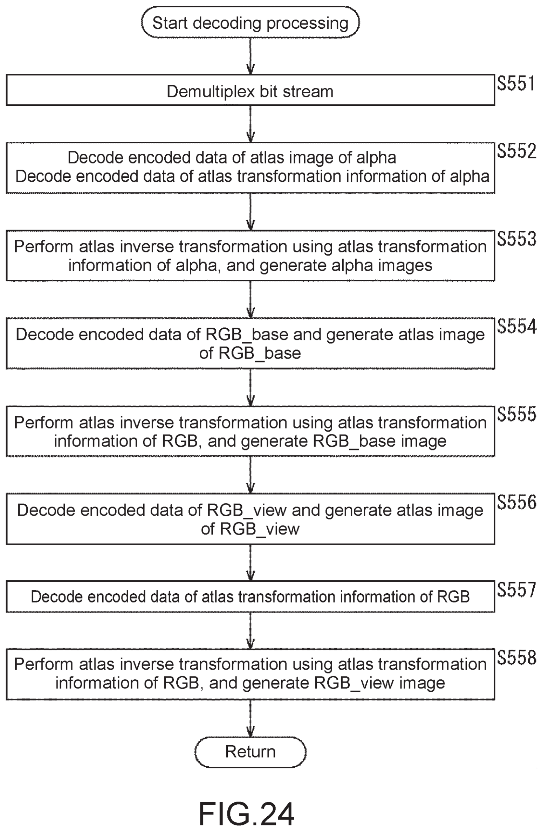

An example of a flow of the decoding processing executed by this decoding device 316 will be described with reference to the flowchart shown in Fig. 24.

When the decoding processing starts, in Step S551, the demultiplexing unit 551 demultiplexes a bit stream to generate encoded data of an atlas image (alpha), encoded data of atlas transformation information (alpha), encoded data of an atlas image (RGB_base), encoded data of an atlas image (RGB_view), and encoded data of atlas transformation information (RGB).

In Step S552, the decoding unit 552A decodes the encoded data of the alpha component to generate the atlas image (alpha). Further, the decoding unit 552B decodes the encoded data of the atlas transformation information (alpha) (encoded data (alpha)) to generate the atlas transformation information (alpha). In Step S553, the atlas inverse transformation unit 553 performs the atlas inverse transformation on the atlas image (alpha) using the atlas transformation information (alpha) to generate alpha images.

In Step S554, the decoding unit 554B decodes the encoded data (RGB) to generate the atlas transformation information (RGB). In Step S555, the decoding unit 554A decodes the encoded data of the RGB_base component to generate the atlas image (RGB_base). In Step S556, the atlas inverse transformation unit 555 performs the atlas inverse transformation on the atlas image (RGB_base) using the atlas transformation information (RGB) to generate the RGB_base image.

In Step S557, the decoding unit 554A decodes the encoded data of the RGB_view component to generate the atlas image (RGB_view). In Step S558, the atlas inverse transformation unit 555 performs the atlas inverse transformation on the atlas image (RGB_view) using the atlas transformation information (RGB) to generate the RGB_view image.

When the processing of Step S558 is ended, the decoding processing is ended, and the processing returns to Fig. 20.

In this manner, in each processing, the present technology described above in <3. Encoding/decoding that uses atlas transformation> may be applied. For example, Method 1 described above may be applied. Further, Method **1-1** described above may be applied. Further, Method 1-1-1 described above may be applied. Further, Method 1-3 described above may be applied. Further, Method 1-3-1 described above may be applied.

By executing each processing in this manner, the decoding device 316 can suppress an increase of the transmission capacity required for transmitting 3D data that uses an MPI as in NeX.

### <Encoding device>

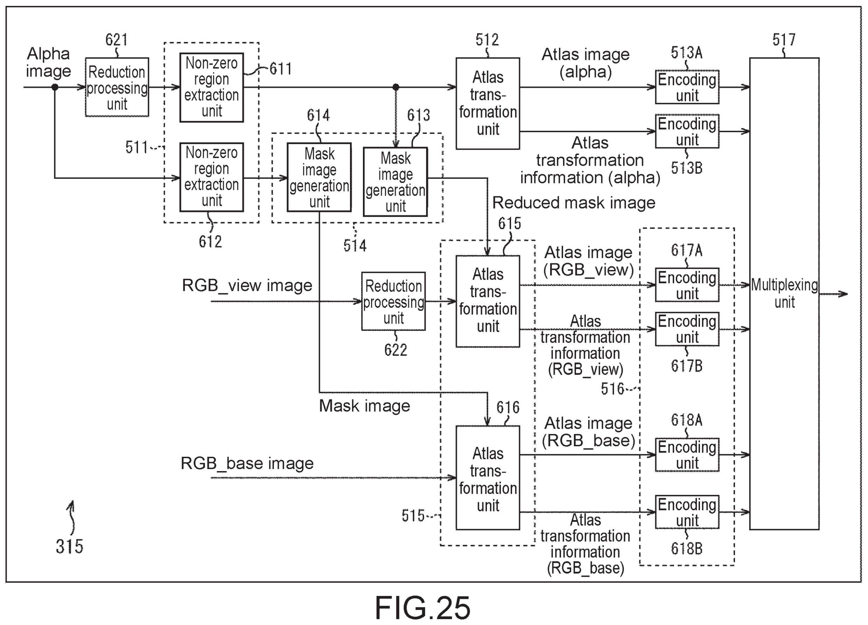

Further, Method 1-2 described above in <3. Encoding/decoding that uses atlas transformation> may be applied to the encoding device 315. A main configuration example of the encoding device 315 in that case is shown in Fig. 25.

Also in this case, the encoding device 315 basically has a configuration similar to that of the example shown in Fig. 21. However, in the case of the example shown in Fig. 25, the non-zero region extraction unit 511 includes a non-zero region extraction unit 611 and a non-zero region extraction unit 612. In addition, the mask image generation unit 514 includes a mask image generation unit 613 and a mask image generation unit 614. In addition, the atlas transformation unit 515 includes an atlas transformation unit 615 and an atlas transformation unit 616. In addition, the encoding unit 516 includes an encoding unit 617A, an encoding unit 617B, an encoding unit 618A, and an encoding unit 618B. In addition, in the case of this example, the encoding device 315 further includes a reduction processing unit 621 and a reduction processing unit 622.

The non-zero region extraction unit 611 may acquire reduced alpha images supplied from the reduction processing unit 621 (will also be referred to as reduced alpha images). The non-zero region extraction unit 611 may also extract non-zero regions from the reduced alpha images. Further, the non-zero region extraction unit 611 may supply the extracted non-zero regions to the atlas transformation unit 512. The non-zero region extraction unit 611 may also supply the reduced alpha images to the mask image generation unit 613.

The non-zero region extraction unit 612 may acquire the alpha images supplied to the encoding device 315. Further, the non-zero region extraction unit 612 may extract non-zero regions from the alpha images. Further, the non-zero region extraction unit 612 may supply the extracted non-zero regions and the alpha images to the mask image generation unit 614.

The mask image generation unit 613 may acquire the reduced alpha images supplied from the non-zero region extraction unit 611. Further, the mask image generation unit 613 may generate a mask image (will also be referred to as a reduced mask image) using the acquired reduced alpha images. At that time, the mask image generation unit 613 may generate intermediate data (reduced mask image) by synthesizing the reduced alpha images of the respective layers for every plurality of consecutive layers corresponding to a single RGB image. Further, the mask image generation unit 613 may supply the generated reduced mask image to the atlas transformation unit 615.

The mask image generation unit 614 may acquire the alpha images and non-zero regions thereof that are supplied from the non-zero region extraction unit 612. Further, the mask image generation unit 614 may generate a mask image using the acquired alpha images and non-zero regions thereof. At that time, the mask image generation unit 614 may generate intermediate data (mask image) by synthesizing the alpha images of the respective layers for every plurality of consecutive layers corresponding to a single RGB image. Further, the mask image generation unit 614 may supply the generated mask image to the atlas transformation unit 616.

The atlas transformation unit 615 may acquire a reduced RGB_view image supplied from the reduction processing unit 622 (will also be referred to as a reduced RGB_view image). Further, the atlas transformation unit 615 may acquire a reduced mask image supplied from the mask image generation unit 613. Further, the atlas transformation unit 615 may perform atlas transformation of the RGB_view component using the reduced mask image and the reduced RGB_view image. For example, the atlas transformation unit 615 may extract a region corresponding to a non-zero region of the reduced mask image from the reduced RGB_view image, and arrange the region in the atlas image (RGB_view). Further, the atlas transformation unit 615 may generate atlas transformation information (RGB_view) related to that atlas transformation. Further, the atlas transformation unit 615 may supply the atlas image (RGB_view), which is the generated atlas image of the RGB_view component, to the encoding unit 617A. Further, the atlas transformation unit 615 may supply the generated atlas transformation information (RGB_view) to the encoding unit 617B. It is noted that the atlas transformation unit 615 may perform such processing every "plurality of consecutive layers corresponding to a single RGB image" in the layer group expressing the three-dimensional space.

The atlas transformation unit 616 may acquire the RGB_base image supplied to the encoding device 315. The atlas transformation unit 616 may also acquire a mask image supplied from the mask image generation unit 614. Further, the atlas transformation unit 616 may perform atlas transformation of the RGB_base component using the mask image and the RGB_base image. For example, the atlas transformation unit 616 may extract a region corresponding to a non-zero region of the mask image from the RGB_base image, and arrange the region in the atlas image (RGB_base). Further, the atlas transformation unit 616 may generate atlas transformation information (RGB_base) related to the atlas transformation. Further, the atlas transformation unit 616 may supply the atlas image (RGB_base), which is the generated atlas image of the RGB_base component, to the encoding unit 618A. Further, the atlas transformation unit 616 may supply the generated atlas transformation information (RGB_base) to the encoding unit 618B. It is noted that the atlas transformation unit 616 may execute such processing every "plurality of consecutive layers corresponding to a single RGB image" in the layer group expressing the three-dimensional space.

The encoding unit 617A and the encoding unit 617B perform processing related to encoding of the RGB_view component. For example, the encoding unit 617A may acquire an atlas image (RGB_view) supplied from the atlas transformation unit 615. Further, the encoding unit 617A may encode the atlas image (RGB_view) using the 2D encoding method (for example, JPEG, MPEG, or the like) to generate encoded data. Further, the encoding unit 617A may supply the generated encoded data of the atlas image (RGB_view) (encoded data (RGB_view)) to the multiplexing unit 517. Further, the encoding unit 617B may acquire atlas transformation information (RGB_view) supplied from the atlas transformation unit 515. The encoding unit 617B may encode the atlas transformation information (RGB_view) to generate encoded data. Any method may be used as the encoding method for this atlas transformation information (RGB_view). For example, the encoding unit 617B may encode the atlas transformation information (RGB_view) according to the MIV/V3C standard. The encoding unit 617B may supply the generated encoded data of the atlas transformation information (RGB_view) (will also be referred to as encoded data (RGB_view)) to the multiplexing unit 517. It is noted that the encoding unit 617A and the encoding unit 617B may execute the processing every "plurality of consecutive layers corresponding to a single RGB image" in the layer group expressing the three-dimensional space. It is noted that the encoding unit 617A and the encoding unit 617B will also be referred to as an encoding unit 617.

The encoding unit 618A and the encoding unit 618B perform processing related to the encoding of the RGB_base component. For example, the encoding unit 618A may acquire an atlas image (RGB_base) supplied from the atlas transformation unit 616. The encoding unit 618A may encode the atlas image (RGB_base) using the 2D encoding method (for example, JPEG, MPEG, or the like) to generate encoded data. The encoding unit 618A may supply the generated encoded data of the atlas image (RGB_base) (encoded data (RGB_base)) to the multiplexing unit 517. Further, the encoding unit 618B may acquire atlas transformation information (RGB_base) supplied from the atlas transformation unit 515. The encoding unit 618B may encode the atlas transformation information (RGB_base) to generate encoded data. Any method may be used as the encoding method for this atlas transformation information (RGB_base). For example, the encoding unit 618B may encode the atlas transformation information (RGB_base) according to the MIV/V3C standard. The encoding unit 618B may supply the generated encoded data of the atlas transformation information (RGB_base) (will also be referred to as encoded data (RGB_base)) to the multiplexing unit 517. It is noted that the encoding unit 618A and the encoding unit 618B may execute the processing every "plurality of consecutive layers corresponding to a single RGB image" in the layer group expressing the three-dimensional space. It is noted that the encoding unit 618A and the encoding unit 618B will also be referred to as an encoding unit 618.

The multiplexing unit 517 in this case may acquire encoded data (alpha) (encoded data of the atlas image (alpha)) supplied from the encoding unit 513A. The multiplexing unit 517 may also acquire encoded data (alpha) (encoded data of the atlas transformation information (alpha)) supplied from the encoding unit 513B. The multiplexing unit 517 may also acquire encoded data (RGB_view) (encoded data of the atlas image (RGB_view)) supplied from the encoding unit 617A. The multiplexing unit 517 may also acquire encoded data (RGB_view) (encoded data of the atlas transformation information (RGB_view)) supplied from the encoding unit 617B. The multiplexing unit 517 may also acquire encoded data (RGB_base) (encoded data of the atlas image (RGB_base)) supplied from the encoding unit 618A. The multiplexing unit 517 may also acquire encoded data (RGB_base) (encoded data of the atlas transformation information (RGB_base)) supplied from the encoding unit 617B. Further, the multiplexing unit 517 may multiplex these acquired pieces of information to generate a bit stream. Further, the multiplexing unit 517 may transmit the generated bit stream.

The reduction processing unit 621 may reduce the alpha images supplied to the encoding device 315 to generate reduced alpha images. The reduction processing unit 621 may supply the generated reduced alpha images to the non-zero region extraction unit 611.

The reduction processing unit 622 may reduce the RGB_view image supplied to the encoding device 315 to generate a reduced RGB_view image. The reduction processing unit 622 may supply the generated reduced RGB_view image to the atlas transformation unit 615.

In the encoding device 315 having such a configuration, the present technology described above in <3. Encoding/decoding that uses atlas transformation> may be applied. For example, Method 1-2 described above may be applied to this encoding device 315. For example, the alpha image may be transformed into the same size as the RGB image.

Further, Method 1-2-1 described above may be applied to this encoding device 315. For example, the RGB image may include an RGB_base image indicating a distribution of an RGB_base component out of the RGB components, and an RGB_view image indicating a distribution of an RGB_view component out of the RGB components. Then, the atlas transformation unit 515 (atlas transformation unit 615 and atlas transformation unit 616) may perform the atlas transformation mutually independently on the RGB_base image and the RGB_view image having different sizes.

Further, Method 1-2-1-1 described above may be applied to this encoding device 315. For example, the atlas transformation unit 616 may perform the atlas transformation on the RGB_base image to generate atlas transformation information of the RGB_base component. The atlas transformation unit 615 may also perform the atlas transformation on the RGB_view image to generate atlas transformation information of the RGB_view component.

Furthermore, Method 1-2-1-2 described above may be applied to this encoding device 315. For example, the mask image generation unit 514 (mask image generation unit 613 and mask image generation unit 614) may generate a mask image in which non-zero regions of the alpha images of the plurality of consecutive layers are synthesized, with respect to each of the RGB_base image and the RGB_view image. Then, the atlas transformation unit 616 may perform the atlas transformation on the RGB_base image using the mask image for the RGB_base image. The atlas transformation unit 615 may also perform the atlas transformation on the RGB_view image using the mask image for the RGB_view image.

Furthermore, Method 1-2-1-3 described above may be applied to this encoding device 315. For example, the reduction processing unit 621 may reduce the alpha images. Furthermore, the reduction processing unit 622 may reduce the RGB_view image. Furthermore, the atlas transformation unit 512 may perform the atlas transformation on the reduced alpha images. Furthermore, the atlas transformation unit 515 (atlas transformation unit 615 and atlas transformation unit 616) may perform the atlas transformation mutually independently on the RGB_base image and the reduced RGB_view image.

With such a configuration, the encoding device 315 can suppress an increase of the transmission capacity required for transmitting 3D data that uses an MPI as in NeX. Also in this case, the processing up to the atlas transformation may be performed when packing the NeX MPI that has been subjected to the post-processing. In other words, the packing device 314 and the encoding device 315 may be integrated.

### <Flow of encoding processing>

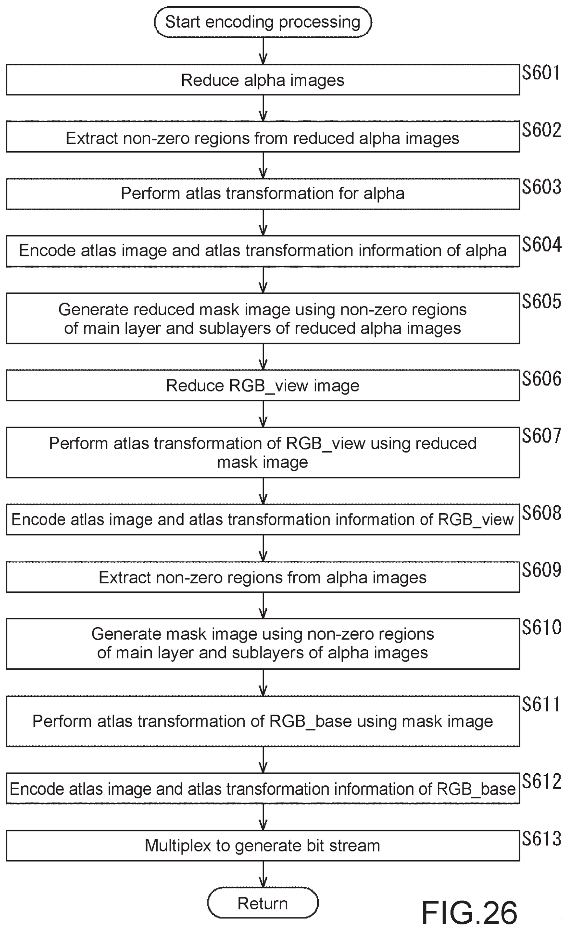

An example of a flow of the encoding processing executed by this encoding device 315 will be described with reference to the flowchart shown in Fig. 26.

When the encoding processing is started, in Step S601, the reduction processing unit 621 reduces the alpha images. In Step S602, the non-zero region extraction unit 611 extracts non-zero regions from the reduced alpha images. In Step S603, the atlas transformation unit 512 performs atlas transformation for the alpha component to generate an atlas image (alpha) and atlas transformation information (alpha). In Step S604, the encoding unit 513A encodes the atlas image of the alpha component to generate encoded data (alpha). In addition, the encoding unit 513B encodes the atlas transformation information of the alpha component to generate encoded data (alpha).

In Step S605, the mask image generation unit 613 generates a reduced mask image using the non-zero regions of the main layer and sublayers of the reduced alpha images. In Step S606, the reduction processing unit 622 reduces the RGB_view image.

In Step S607, the atlas transformation unit 615 performs the atlas transformation on the RGB_view using the reduced mask image to generate an atlas image (RGB_view). In Step S608, the encoding unit 617A encodes the atlas image of the RGB_view component to generate encoded data (RGB_view). In addition, the encoding unit 617B encodes the atlas transformation information of the RGB_view component to generate encoded data (RGB_view).

In Step S609, the non-zero region extraction unit 612 extracts non-zero regions from the alpha images. In Step S610, the mask image generation unit 614 generates a mask image using the non-zero regions of the main layer and sublayers of the alpha images.

In Step S611, the atlas transformation unit 616 performs the atlas transformation on the RGB_base using that mask image to generate an atlas image (RGB_base). In Step S612, the encoding unit 618A encodes the atlas image of the RGB_base component to generate encoded data (RGB_base). In addition, the encoding unit 618B encodes the atlas transformation information of the RGB_base component to generate encoded data (RGB_base).

In Step S613, the multiplexing unit 517 multiplexes the encoded data of the atlas image (alpha), the encoded data of the atlas transformation information (alpha), the encoded data of the atlas image (RGB_base), the encoded data of the atlas image (RGB_view), the encoded data of the atlas transformation information (RGB_base), and the encoded data of the atlas transformation information (RGB_view) to generate a bit stream.

When the processing of Step S613 is ended, the encoding processing is ended, and the processing returns to Fig. 19.

In this manner, in each processing, the present technology described above in <3. Encoding/decoding that uses atlas transformation> may be applied. For example, Method 1-2 described above may be applied. Further, Method 1-2-1 described above may be applied. Further, Method 1-2-1-1 described above may be applied. Further, Method 1-2-1-2 described above may be applied. Further, Method 1-2-1-3 described above may be applied.

By executing each processing in this manner, the encoding device 315 can suppress an increase of the transmission capacity required for transmitting 3D data that uses an MPI as in NeX.

### <Decoding device>

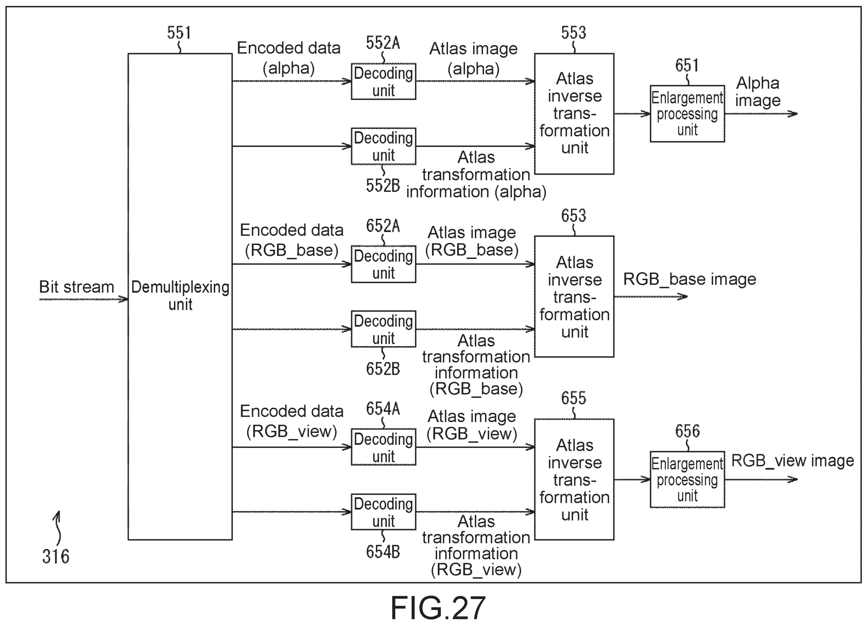

Further, Method 1-2 described above in <3. Encoding/decoding that uses atlas transformation> may be applied to the decoding device 316. A main configuration example of the decoding device 316 in that case is shown in Fig. 27.

Also in this case, the decoding device 316 basically has a configuration similar to that of the example shown in Fig. 23. However, in the case of the example shown in Fig. 27, the decoding device 316 includes a decoding unit 652A, a decoding unit 652B, a decoding unit 654A, and a decoding unit 654B in place of the decoding unit 554. In addition, the decoding device 316 includes an atlas inverse transformation unit 653 and an atlas inverse transformation unit 655 in place of the atlas inverse transformation unit 555. In addition, the decoding device 316 further includes an enlargement processing unit 651 and an enlargement processing unit 656. In this case, the demultiplexing unit 551 may acquire a bit stream and demultiplex the bit stream in a manner similar to that of the case shown in Fig. 23. The demultiplexing unit 551 may supply the generated encoded data of the atlas image (alpha) (encoded data (alpha)) to the decoding unit 552A. The demultiplexing unit 551 may supply the generated encoded data of the atlas transformation information (alpha) (encoded data (alpha)) to the decoding unit 552B. The demultiplexing unit 551 may supply the generated encoded data of the atlas image (RGB_base) (encoded data (RGB_base)) to the decoding unit 652A. The demultiplexing unit 551 may supply the generated encoded data of the atlas transformation information (RGB_base) (encoded data (RGB_base)) to the decoding unit 652B. The demultiplexing unit 551 may supply the generated encoded data of the atlas image (RGB_view) (encoded data (RGB_view)) to the decoding unit 654A. The demultiplexing unit 551 may supply the generated encoded data of the atlas transformation information (RGB_view) (encoded data (RGB_view)) to the decoding unit 654B. The decoding unit 552A may decode the encoded data (alpha) in a manner similar to that of the case shown in Fig. 23, and supply the generated atlas image (alpha) to the atlas inverse transformation unit 553. The decoding unit 552B may decode the encoded data (alpha) in a manner similar to that of the case shown Fig. 23, and supply the generated atlas transformation information (alpha) to the atlas inverse transformation unit 553.

In this case, the atlas inverse transformation unit 553 may perform the atlas inverse transformation on the atlas image (alpha) to generate reduced alpha images. That is, the atlas inverse transformation unit 553 may acquire the atlas image (alpha) supplied from the decoding unit 552A. Further, the atlas inverse transformation unit 553 may acquire the atlas transformation information (alpha) supplied from the decoding unit 552B. Further, the atlas inverse transformation unit 553 may perform the atlas inverse transformation on the atlas image (alpha) using the atlas transformation information (alpha) to generate (restore) reduced alpha images. The atlas inverse transformation unit 553 may supply the reduced alpha images to the enlargement processing unit 651. The enlargement processing unit 651 performs processing related to the enlargement of the reduced alpha images. For example, the enlargement processing unit 651 may acquire the reduced alpha images supplied from the atlas inverse transformation unit 553. The enlargement processing unit 651 may enlarge the reduced alpha images to generate (restore) alpha images. The enlargement processing unit 651 may supply the generated alpha images to the unpacking device 317.

The decoding unit 652A and the decoding unit 652B perform processing related to the decoding of the RGB_base component. For example, the decoding unit 652A may acquire the encoded data of the atlas image (RGB_base) (encoded data (RGB_base)) supplied from the demultiplexing unit 551. The decoding unit 652A may decode the encoded data (RGB_base) by the 2D decoding method (for example, JPEG, MPEG, or the like) to generate the atlas image (RGB_base). The decoding unit 652A may supply the atlas image (RGB_base) to the atlas inverse transformation unit 653. The decoding unit 652B may acquire the encoded data of the atlas transformation information (RGB_base) (encoded data (RGB_base)) supplied from the demultiplexing unit 551. The decoding unit 652B may decode the encoded data (RGB_base) to generate the atlas transformation information (RGB_base). This decoding method may be any method. For example, the decoding unit 652B may decode the encoded data (RGB_base) according to the MIV/V3C standard. Further, the decoding unit 652B may supply the atlas transformation information (RGB_base) to the atlas inverse transformation unit 653. It is noted that the decoding unit 652A and the decoding unit 652B will also be referred to as a decoding unit 652.

The atlas inverse transformation unit 653 performs processing related to the atlas inverse transformation of the RGB_base component. For example, the atlas inverse transformation unit 653 may acquire the atlas image (RGB_base) supplied from the decoding unit 652A. The atlas inverse transformation unit 653 may also acquire the atlas transformation information (RGB_base) supplied from the decoding unit 652B. Further, the atlas inverse transformation unit 653 may perform the atlas inverse transformation on the atlas image (RGB_base) using the atlas transformation information (RGB_base) to generate (restore) the RGB_base image. The atlas inverse transformation unit 653 may supply the generated RGB_base image to the unpacking device 317.

The decoding unit 654A and the decoding unit 654B perform processing related to the decoding of the RGB_view component. For example, the decoding unit 654A may acquire the encoded data of the atlas image (RGB_view) (encoded data (RGB_view)) supplied from the demultiplexing unit 551. The decoding unit 654A may decode the encoded data (RGB_view) by the 2D decoding method (for example, JPEG, MPEG, or the like) to generate the atlas image (RGB_view). The decoding unit 654A may supply the atlas image (RGB_view) to the atlas inverse transformation unit 655. The decoding unit 654B may acquire the encoded data of the atlas transformation information (RGB_view) (encoded data (RGB_view)) supplied from the demultiplexing unit 551. The decoding unit 654B may decode the encoded data (RGB_view) to generate the atlas transformation information (RGB_view). This decoding method may be any method. For example, the decoding unit 654B may decode the encoded data (RGB_view) according to the MIV/V3C standard. Further, the decoding unit 654B may supply the atlas transformation information (RGB_view) to the atlas inverse transformation unit 655. It is noted that the decoding unit 654A and the decoding unit 654B will also be referred to as a decoding unit 654.

The atlas inverse transformation unit 655 may acquire, for example, the atlas image (RGB_view) supplied from the decoding unit 654A. The atlas inverse transformation unit 655 may also acquire the atlas transformation information (RGB_view) supplied from the decoding unit 654B. Further, the atlas inverse transformation unit 655 may perform the atlas inverse transformation on the atlas image (RGB_view) using the atlas transformation information (RGB_view) to generate (restore) the reduced RGB_view image. The atlas inverse transformation unit 655 may supply the generated reduced RGB_view image to the enlargement processing unit 656.

The enlargement processing unit 656 may acquire the reduced RGB_view image supplied from the atlas inverse transformation unit 655. The enlargement processing unit 656 may enlarge the reduced RGB_view image to generate (restore) the RGB_view image. The enlargement processing unit 656 may supply the generated RGB_view image to the unpacking device 317.

In the decoding device 316 having such a configuration, the present technology described above in <3. Encoding/decoding that uses atlas transformation> may be applied. For example, Method 1-2 described above may be applied to this decoding device 316. That is, the alpha image may be transformed into the same size as the RGB image to generate a mask.

Further, Method 1-2-1 described above may be applied to this decoding device 316. For example, the RGB image may include an RGB_base image indicating a distribution of an RGB_base component out of the RGB components, and an RGB_view image indicating a distribution of an RGB_view component out of the RGB components. Further, the RGB_base image and the RGB_view image may have different sizes. Furthermore, the decoding unit 652A and the decoding unit 654A may respectively decode the encoded data of the atlas image of the RGB_base component and the encoded data of the atlas image of the RGB_view component. Then, the atlas inverse transformation unit 653 and the atlas inverse transformation unit 655 may perform the atlas inverse transformation mutually independently on the atlas image of the RGB_base component and the atlas image of the RGB_view component.

Further, Method 1-2-1-1 described above may be applied to this decoding device 316. For example, the atlas inverse transformation unit 653 may perform the atlas inverse transformation on the atlas image of the RGB_base component using the atlas transformation information of the RGB_base component. Moreover, the atlas inverse transformation unit 655 may perform the atlas inverse transformation on the atlas image of the RGB_view component using the atlas transformation information of the RGB_view component. In addition, the atlas transformation information may be information indicating a content of the atlas transformation.

Further, Method 1-2-1-3 described above may be applied to this decoding device 316. For example, the enlargement processing unit 651 may enlarge the reduced alpha images. Further, the enlargement processing unit 656 may enlarge the reduced RGB_view image.

With such a configuration, the decoding device 316 can suppress an increase of the transmission capacity required for transmitting 3D data that uses an MPI as in NeX. Also in this case, the atlas inverse transformation may be performed when unpacking the alpha images, the RGB_base image, and the RGB_view image. In other words, the decoding device 316 and the unpacking device 317 may be integrated.

### <Flow of decoding processing>

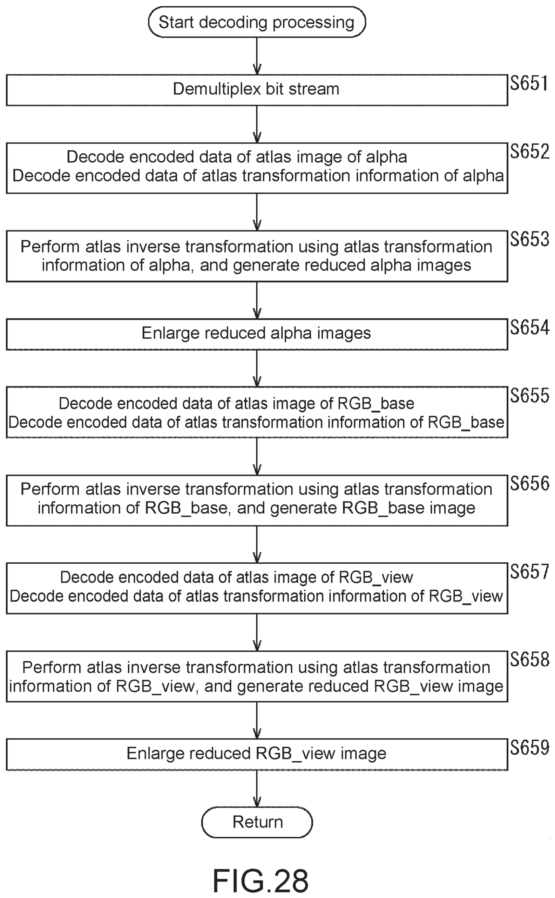

An example of a flow of the decoding processing executed by this decoding device 316 will be described with reference to the flowchart shown in Fig. 28.

When the decoding processing is started, in Step S651, the demultiplexing unit 551 demultiplexes a bit stream to generate encoded data of an atlas image (alpha), encoded data of atlas transformation information (alpha), encoded data of an atlas image (RGB_base), encoded data of atlas transformation information (RGB_base), encoded data of an atlas image (RGB_view), and encoded data of atlas transformation information (RGB_view).

In Step S652, the decoding unit 552A decodes the encoded data of the atlas image of the alpha component to generate an atlas image (alpha). Further, the decoding unit 552B decodes the encoded data of the atlas transformation information of the alpha component to generate atlas transformation information (alpha). In Step S653, the atlas inverse transformation unit 553 performs atlas inverse transformation on the atlas image (alpha) using the atlas transformation information (alpha) to generate reduced alpha images. In Step S654, the enlargement processing unit 651 enlarges the reduced alpha images.

In Step S655, the decoding unit 652A decodes the encoded data of the atlas image of the RGB_base component to generate an atlas image (RGB_base). Further, the decoding unit 652B decodes the encoded data of the atlas transformation information of the RGB_base component to generate atlas transformation information (RGB_base). In Step S656, the atlas inverse transformation unit 653 performs the atlas inverse transformation on the atlas image (RGB_base) using the atlas transformation information (RGB_base) to generate an RGB_base image.

In Step S657, the decoding unit 654A decodes the encoded data of the atlas image of the RGB_view component to generate an atlas image (RGB_view). Further, the decoding unit 654B decodes the encoded data of the atlas transformation information of the RGB_view component to generate atlas transformation information (RGB_view). In Step S658, the atlas inverse transformation unit 655 performs the atlas inverse transformation on the atlas image (RGB_view) using the atlas transformation information (RGB_view) to generate a reduced RGB_view image. In Step S659, the enlargement processing unit 656 enlarges the reduced RGB_view image.

When the processing of Step S659 is ended, the decoding processing is ended, and the processing returns to Fig. 20.

In this manner, in each processing, the present technology described above in <3. Encoding/decoding that uses atlas transformation> may be applied. For example, Method 1-2 described above may be applied. Further, Method 1-2-1 described above may be applied. Further, Method 1-2-1-1 described above may be applied. Further, Method 1-2-1-2 described above may be applied. Further, Method 1-2-1-3 described above may be applied.

By executing each processing in this manner, the decoding device 316 can suppress an increase of the transmission capacity required for transmitting 3D data that uses an MPI as in NeX.

### <Encoding device>

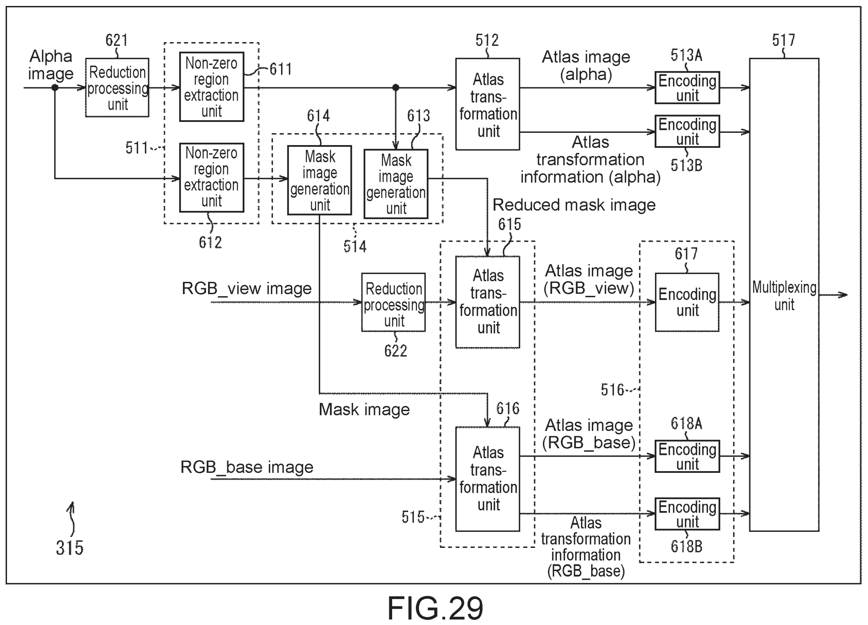

Further, Method 1-2-2 described above in <3. Encoding/decoding that uses atlas transformation> may be applied to the encoding device 315. A main configuration example of the encoding device 315 in that case is shown in Fig. 29.

As shown in Fig. 29, also in this case, the encoding device 315 basically has a configuration similar to that of the example shown in Fig. 25. However, in the case of the example shown in Fig. 29, the atlas transformation unit 615 does not generate the atlas transformation information (RGB_view) (or does not supply the atlas transformation information (RGB_view) to the encoding unit 617B).

That is, the encoding unit 617B may be omitted as in the example shown in Fig. 29. The multiplexing unit 517 in this case may acquire the encoded data (alpha), the atlas transformation information (alpha), the encoded data (RGB_view), the encoded data (RGB_base), and the atlas transformation information (RGB_base), and multiplex the encoded data to generate a bit stream.

In the encoding device 315 having such a configuration, the present technology described above in <3. Encoding/decoding that uses atlas transformation> may be applied. For example, Method 1-2-2 described above may be applied to this encoding device 315. For example, the RGB image may include an RGB_base image indicating a distribution of an RGB_base component out of the RGB components, and an RGB_view image indicating a distribution of an RGB_view component out of the RGB components. Further, the RGB_base image and the RGB_view image may have different sizes. Furthermore, the atlas transformation unit 515 (atlas transformation unit 615 and atlas transformation unit 616) may perform the atlas transformation on the RGB_base image and the RGB_view image to generate atlas transformation information of the RGB_base component or the RGB_view component. It is noted that the atlas transformation information may be information indicating a content of the atlas transformation.

Further, Method 1-2-2-1 described above may be applied to this encoding device 315. For example, the atlas transformation information, reduction instruction, reduction ratio, and the like to be diverted may be defined in a file.

With such a configuration, the encoding device 315 can suppress an increase of the transmission capacity required for transmitting 3D data that uses an MPI as in NeX. Also in this case, the processing up to the atlas transformation may be performed when packing the NeX MPI that has been subjected to the post-processing. In other words, the packing device 314 and the encoding device 315 may be integrated.

The flow of the encoding processing in this case is basically similar to that of the example shown in Fig. 26. However, it is only necessary that in Step S608, the atlas image (RGB_view) is encoded by the encoding unit 617A, and the encoding of the atlas transformation information (RGB_view) is omitted (skip). Then, in Step S613, the multiplexing unit 517 only needs to multiplex the encoded data of the atlas image (alpha), the encoded data of the atlas transformation information (alpha), the encoded data of the atlas image (RGB_base), the encoded data of the atlas image (RGB_view), and the encoded data of the atlas transformation information (RGB_base) to generate a bit stream.

### <Decoding device>

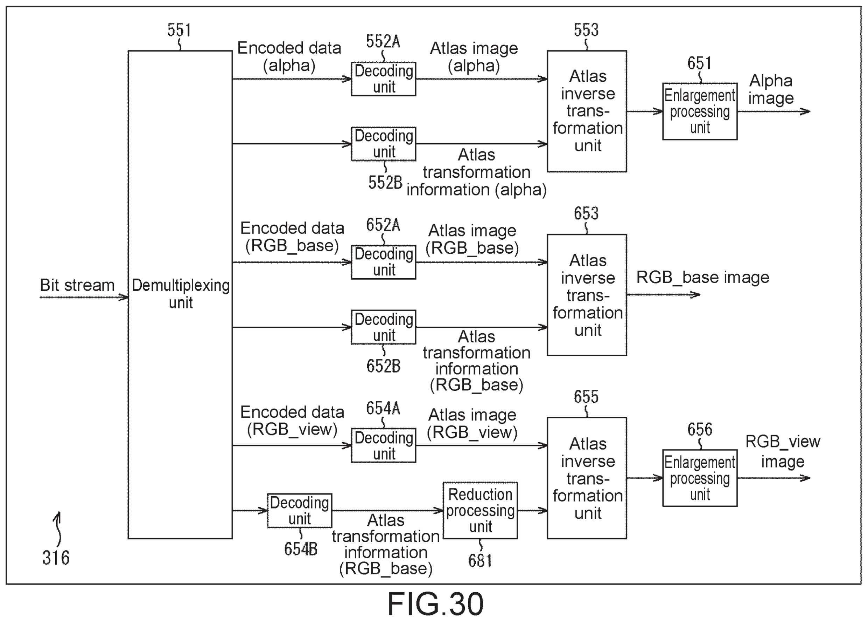

Further, Method 1-2-2 described above in <3. Encoding/decoding that uses atlas transformation> may be applied to the decoding device 316. A main configuration example of the decoding device 316 in that case is shown in Fig. 30.

Also in this case, the decoding device 316 basically has a configuration similar to that of the example shown in Fig. 27. However, in the case of the example shown in Fig. 30, the decoding device 316 further includes a reduction processing unit 681.

In the case of this example, the demultiplexing unit 551 demultiplexes a bit stream and supplies the generated atlas transformation information (RGB_base) to the decoding unit 652B and the decoding unit 654B.

In this case, similar to the decoding unit 652B, the decoding unit 654B acquires the encoded data of the atlas transformation information (RGB_base) from the demultiplexing unit 551 and decodes the encoded data. Then, the decoding unit 654B supplies the atlas transformation information (RGB_base) generated by the decoding to the reduction processing unit 681. It is noted that this decoding unit 654B may be omitted, and the atlas transformation information (RGB_base) may be supplied from the decoding unit 652B to the reduction processing unit 681. The reduction processing unit 681 may acquire the atlas transformation information (RGB_base) supplied from the decoding unit 654B (or the decoding unit 652B). Further, the reduction processing unit 681 may reduce (downscale) the atlas transformation information (RGB_base) and supply the reduced atlas transformation information (RGB_base) to the atlas inverse transformation unit 655.

The atlas inverse transformation unit 655 may perform the atlas inverse transformation on the atlas image (RGB_view) using the reduced atlas transformation information (RGB_base) to generate a reduced RGB_view image.

In the decoding device 316 having such a configuration, the present technology described above in <3. Encoding/decoding that uses atlas transformation> may be applied. For example, Method 1-2-2 described above may be applied to this decoding device 316. For example, the RGB image may include an RGB_base image showing a distribution of an RGB_base component out of the RGB components, and an RGB_view image showing a distribution of an RGB_view component out of the RGB components. Further, the RGB_base image and the RGB_view image may have different sizes. Further, the decoding unit 652A may decode the encoded data of the atlas image of the RGB_base component, and the decoding unit 654A may decode the encoded data of the atlas image of the RGB_view component. Furthermore, the atlas inverse transformation unit 653 may perform the atlas inverse transformation on the atlas image of the RGB_base component using the atlas transformation information of the RGB_base component, and the atlas inverse transformation unit 655 may perform the atlas inverse transformation on the atlas image of the RGB_view component using the atlas transformation information of the RGB_view component. Further, the reduction processing unit 681 may reduce the atlas transformation information of the RGB_base component or the RGB_view component.

Further, Method 1-2-2-1 described above may be applied to this decoding device 316. For example, the atlas transformation information, reduction instruction, reduction ratio, and the like to be diverted may be set according to a definition of a file.

With such a configuration, the decoding device 316 can suppress an increase of the transmission capacity required for transmitting 3D data that uses an MPI as in NeX. Also in this case, the atlas inverse transformation may be performed when unpacking the alpha images, the RGB_base image, and the RGB_view image. In other words, the decoding device 316 and the unpacking device 317 may be integrated.

### <Flow of decoding processing>

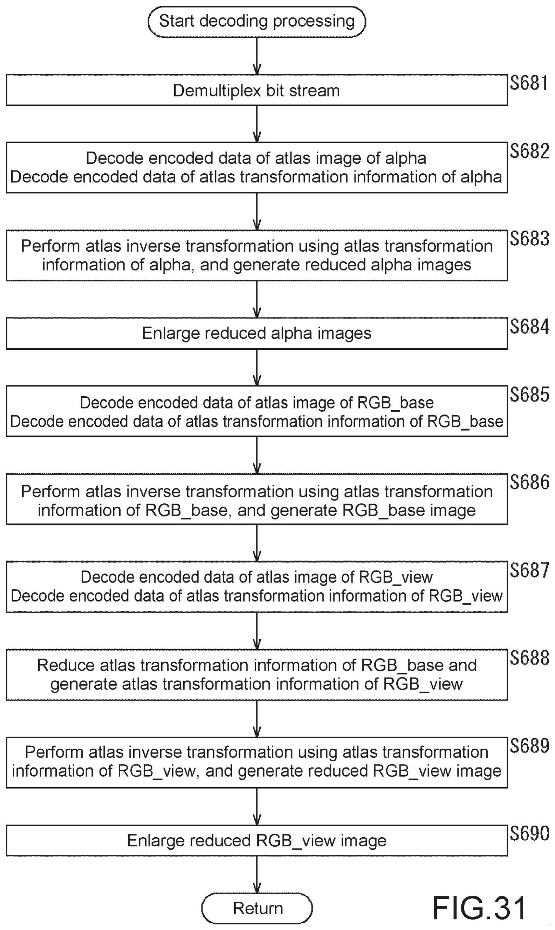

An example of a flow of the decoding processing executed by this decoding device 316 will be described with reference to the flowchart shown in Fig. 31.

When the decoding processing is started, in Step S681, the demultiplexing unit 551 demultiplexes a bit stream.

In Step S682, the decoding unit 552A decodes the encoded data of the atlas image of the alpha component to generate an atlas image (alpha). Further, the decoding unit 552B decodes the encoded data of the atlas transformation information of the alpha component to generate atlas transformation information (alpha). In Step S683, the atlas inverse transformation unit 553 performs atlas inverse transformation on the atlas image (alpha) using the atlas transformation information (alpha) to generate reduced alpha images. In Step S684, the enlargement processing unit 651 enlarges the reduced alpha images.

In Step S685, the decoding unit 652A decodes the encoded data of the atlas image of the RGB_base component to generate an atlas image (RGB_base). Further, the decoding unit 652B decodes the encoded data of the atlas transformation information of the RGB_base component to generate atlas transformation information (RGB_base). In Step S686, the atlas inverse transformation unit 653 performs the atlas inverse transformation on the atlas image (RGB_base) using the atlas transformation information (RGB_base) to generate an RGB_base image.

In Step S687, the decoding unit 654A decodes the encoded data of the atlas image of the RGB_view component to generate an atlas image (RGB_view). Further, the decoding unit 654B decodes the encoded data of the atlas transformation information of the RGB_base component to generate atlas transformation information (RGB_base). In Step S688, the reduction processing unit 681 reduces the atlas transformation information (RGB_base) to generate atlas transformation information for the RGB_view component (reduced atlas transformation information (RGB_base)).

In Step S689, the atlas inverse transformation unit 655 performs the atlas inverse transformation on the atlas image (RGB_view) using the atlas transformation information for the RGB_view component (reduced atlas transformation information (RGB_base)) to generate a reduced RGB_view image. In Step S690, the enlargement processing unit 656 enlarges the reduced RGB_view image.

When the processing of Step S690 is ended, the decoding processing is ended, and the processing returns to Fig. 20.

In this manner, in each processing, the present technology described above in <3. Encoding/decoding that uses atlas transformation> may be applied. For example, Method 1-2-2 described above may be applied. Further, Method 1-2-2-1 described above may be applied.

By executing each processing in this manner, the decoding device 316 can suppress an increase of the transmission capacity required for transmitting 3D data that uses an MPI as in NeX.

### <5. Notes>

### <Computer>

The series of processing described above can be executed by hardware or can be executed by software. When the series of processing is executed by software, a program configuring the software is installed in a computer. Herein, the computer includes a computer incorporated into dedicated hardware, a computer such as a general-purpose personal computer, for example, that is capable of installing various programs therein to execute various functions, and the like.

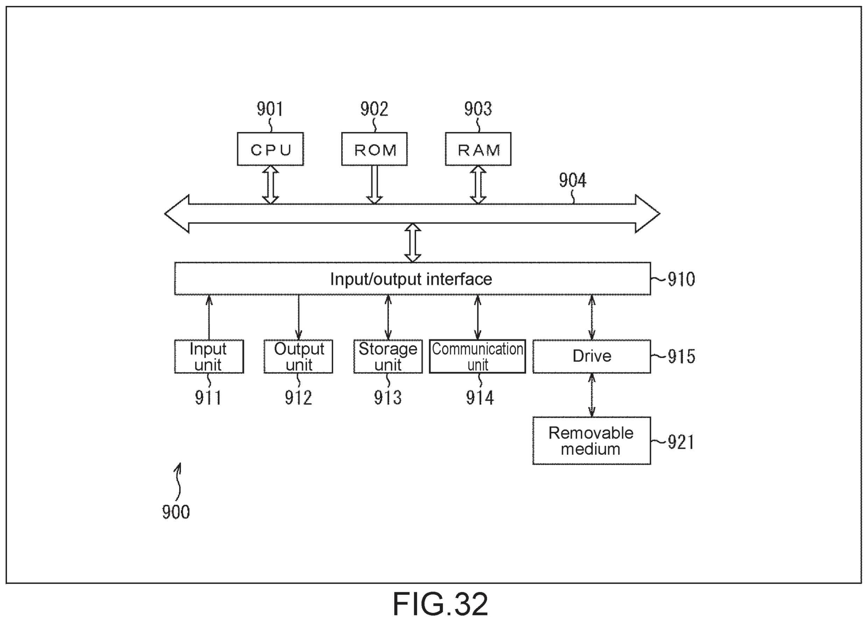

Fig. 32 is a block diagram showing a hardware configuration example of a computer that executes the series of processing described above by a program.

In a computer 900 shown in Fig. 32, a CPU (Central Processing Unit) 901, a ROM (Read Only Memory) 902, and a RAM (Random Access Memory) 903 are mutually connected via a bus 904.

An input/output interface 910 is also connected to the bus 904. Connected to the input/output interface 910 are an input unit 911, an output unit 912, a storage unit 913, a communication unit 914, and a drive 915.

The input unit 911 is constituted of, for example, a keyboard, a mouse, a microphone, a touch panel, an input terminal, and the like. The output unit 912 is constituted of, for example, a display, a speaker, an output terminal, and the like. The storage unit 913 is constituted of, for example, a hard disk, a RAM disk, a nonvolatile memory, and the like. The communication unit 914 is constituted of, for example, a network interface. The drive 915 drives a removable medium 921 such as a magnetic disc, an optical disc, a magneto optical disc, or a semiconductor memory.

In the computer configured as described above, the CPU 901 loads a program stored in the storage unit 913 into the RAM 903 via the input/output interface 910 and the bus 904 and executes it, to carry out the series of processing described above, for example. Data required for the CPU 901 to execute various types of processing, and the like are also stored in the RAM 903 as appropriate.

The program executed by the computer can be applied by being recorded onto the removable medium 921 as a package medium or the like, for example. In that case, the program can be installed in the storage unit 913 via the input/output interface 910 by loading the removable medium 921 into the drive 915.

Further, this program can also be provided via wired or wireless transmission media such as a local area network, the Internet, and digital satellite broadcasting. In that case, the program can be received by the communication unit 914 to be installed in the storage unit 913.

Alternatively, this program can be installed in advance in the ROM 902 or the storage unit 913.

### <Application target of present technology>

The present technology can be applied to arbitrary configurations. For example, the present technology may be applied to various electronic apparatuses.

Moreover, for example, the present technology can be executed as a partial configuration of an apparatus, such as a processor as a system LSI (Large Scale Integration) or the like (for example, video processor), a module that uses a plurality of processors and the like (for example, video module), a unit that uses a plurality of modules and the like (for example, video unit), or a set obtained by adding other functions to the unit (for example, video set).

Further, for example, the present technology can also be applied to a network system constituted of a plurality of apparatuses. For example, the present technology may be executed as cloud computing in which a plurality of apparatuses share and cooperate to process via a network. For example, the present technology may be executed in, for example, a cloud service that provides a service related to images (moving images) to an arbitrary terminal such as a computer, an AV (Audio Visual) apparatus, a mobile information processing terminal, and an IoT (Internet of Things) device.

It is noted that in the present specification, the system refers to an aggregation of a plurality of constituent elements (apparatuses, modules (components), and the like), and whether or not all of the constituent elements are within the same housing is irrelevant. Accordingly, a plurality of apparatuses that are housed in separate housings and are connected via a network and a single apparatus in which a plurality of modules are housed in a single housing are both systems.

### <Fields/uses to which present technology can be applied>

The systems, apparatuses, processing units, and the like to which the present technology is applied can be used in arbitrary fields of, for example, traffic, medical care, crime prevention, agriculture, livestock business, mining, beauty care, industrial plants, home electrical appliance, weather, natural surveillance, and the like. In addition, uses thereof are also arbitrary.

### <Others>

It is noted that "flag" used in the present specification is information for identifying a plurality of states and includes not only information used when identifying two states of true (1) and false (0) but also information with which three or more states can be identified. Accordingly, values that this "flag" may take may be, for example, binary as in 1/0 or ternary or more. In other words, a bit count configuring this "flag" is arbitrary and may be 1 bit or a plurality of bits. Further, since identification information (including the flag) may take not only a form in which the identification information is incorporated in a bit stream but also a form in which differential information of the identification information with respect to certain information that becomes a reference is incorporated in a bit stream, in the present specification, the "flag" or "identification information" includes not only that information but also differential information with respect to information that becomes a reference.

In addition, various types of information (metadata and the like) related to encoded data (bit stream) may be transmitted or recorded in any form as long as the information is associated with the encoded data. Herein, the term "associate" means enabling, when processing one of the data, the other data to be used (to be linked). In other words, the data associated with each other may be compiled as one piece of data or may each be regarded as individual data. For example, information associated with encoded data (image) may be transmitted on a transmission path different from that of the encoded data (image). Further, for example, information associated with encoded data (image) may be recorded on a recording medium different from that of the encoded data (image) (or in a different recording area in the same recording medium). It is noted that this "associate" may be applied to not only the entire data but also a part of the data. For example, an image and information corresponding to the image may be associated with each other in an arbitrary unit including a plurality of frames, one frame, one portion in a frame, or the like.

It is noted that in the present specification, the terms "synthesize", "multiplex", "add", "integrate", "incorporate", "store", "put into", "inset", "insert", and the like mean compiling a plurality of objects into one, such as compiling encoded data and metadata into one piece of data, for example, and refer to one method of "associate" described above.

Further, embodiments of the present technology are not limited to the embodiments described above and can be variously modified without departing from the gist of the present technology.

For example, the configuration described as one apparatus (or processing unit) may be divided to be configured as a plurality of apparatuses (or processing units). Conversely, the configuration described above as a plurality of apparatuses (or processing units) may collectively be configured as one apparatus (or processing unit). Furthermore, configurations other than those described above may of course be added to the configurations of the respective apparatuses (or the respective processing units). In addition, as long as configurations and operations as the entire system are substantially the same, a part of a configuration of a certain apparatus (or processing unit) may be incorporated into a configuration of another apparatus (or another processing unit).

Furthermore, for example, the program described above may be executed in an arbitrary apparatus. In that case, the apparatus only needs to have necessary functions (functional blocks and the like) so as to be capable of acquiring necessary information.

Moreover, for example, respective steps of a single flowchart may be executed by a single apparatus, or may be shared by a plurality of apparatuses to be executed. In addition, when a plurality of processing is included in a single step, the plurality of processing may be executed by a single apparatus, or may be shared by a plurality of apparatuses to be executed. In other words, the plurality of processing included in a single step can be executed as processing of a plurality of steps. Conversely, processing described as a plurality of steps can collectively be executed as a single step.

Furthermore, for example, regarding the program executed by the computer, the processing of the steps describing the program may be executed in time series in the order described in the present specification, or may be executed individually in parallel or at necessary timings such as when invoked. In other words, as long as no contradiction is caused, the processing of the respective steps may be executed in an order different from the order described above. In addition, the processing of the steps describing the program may be executed in parallel with processing of other programs, or may be executed in combination with the processing of other programs.

Further, for example, as long as no contradiction is caused, the plurality of technologies related to the present technology can each be executed independently and individually. Of course, a plurality of arbitrary present technologies can be executed in combination. For example, a part or all of the present technology described in any of the embodiments can be executed in combination with a part or all of the present technology described in the other embodiments. Moreover, a part or all of the arbitrary present technology described above can be executed in combination with other technologies not described above.

It is noted that the present technology can also take the following configurations.
(1) An information processing apparatus, including:
   a first atlas transformation unit which performs atlas transformation on alpha images of 3D data to generate an atlas image of an alpha component;
   a first encoding unit which encodes the atlas image of the alpha component;
   a second atlas transformation unit which performs the atlas transformation on an RGB image of the 3D data to generate an atlas image of RGB components; and
   a second encoding unit which encodes the atlas image of the RGB components.
(2) The information processing apparatus according to (1), further including:
   a mask image generation unit which generates a mask image in which non-zero regions of the alpha images of the plurality of consecutive layers are synthesized, in which
   the second atlas transformation unit is configured to perform the atlas transformation on the RGB image using the mask image.
(3) The information processing apparatus according to (2), in which
   the RGB image includes an RGB_base image indicating a distribution of an RGB_base component out of the RGB components and an RGB_view image indicating a distribution of an RGB_view component out of the RGB components,
   the second atlas transformation unit is configured to perform the atlas transformation on the RGB_base image and the RGB_view image to generate an atlas image of each of the RGB_base image and the RGB_view image, and generate atlas transformation information common to the RGB_base component and the RGB_view component, and
   the atlas transformation information is information indicating a content of the atlas transformation.
(4) The information processing apparatus according to (1), in which
   the RGB image includes an RGB_base image indicating a distribution of an RGB_base component out of the RGB components and an RGB_view image indicating a distribution of an RGB_view component out of the RGB components, and
   the second atlas transformation unit is configured to perform the atlas transformation mutually independently on the RGB_base image and the RGB_view image having different sizes.
(5) The information processing apparatus according to (4), in which
   the second atlas transformation unit is configured to perform the atlas transformation on the RGB_base image to generate atlas transformation information of the RGB_base component, and perform the atlas transformation on the RGB_view image to generate atlas transformation information of the RGB_view component, and
   the atlas transformation information is information indicating a content of the atlas transformation.
(6) The information processing apparatus according to (4) or (5), further including:
   a mask image generation unit which generates, with respect to each of the RGB_base image and the RGB_view image, a mask image in which non-zero regions of the alpha images of the plurality of consecutive layers are synthesized, in which
   the second atlas transformation unit is configured to perform the atlas transformation on the RGB_base image using the mask image for the RGB_base image, and perform the atlas transformation on the RGB_view image using the mask image for the RGB_view image.
(7) The information processing apparatus according to any one of (4) to (6), further including:
   a reduction processing unit which reduces the alpha images and the RGB_view image, in which
   the first atlas transformation unit is configured to perform the atlas transformation on the reduced alpha images, and
   the second atlas transformation unit is configured to perform the atlas transformation mutually independently on the RGB_base image and the reduced RGB_view image.
(8) The information processing apparatus according to (1), in which
   the RGB image includes an RGB_base image indicating a distribution of an RGB_base component out of the RGB components and an RGB_view image indicating a distribution of an RGB_view component out of the RGB components,
   the RGB_base image and the RGB_view image have different sizes,
   the second atlas transformation unit is configured to perform the atlas transformation on the RGB_base image and the RGB_view image to generate atlas transformation information of the RGB_base component or the RGB_view component, and
   the atlas transformation information is information indicating a content of the atlas transformation.
(9) The information processing apparatus according to any one of (1) to (8), in which
   the RGB image includes an RGB_base image indicating a distribution of an RGB_base component out of the RGB components and an RGB_view image indicating a distribution of an RGB_view component out of the RGB components,
   the second atlas transformation unit is configured to perform the atlas transformation on the RGB_base image and the RGB_view image to generate an atlas image of each of the RGB_base image and the RGB_view image,
   the information processing apparatus further includes:
      a multiplexing unit which multiplexes, using identification information, encoded data of the atlas image of the alpha component, encoded data of the atlas image of the RGB_base component, and encoded data of the atlas image of the RGB_view component, to generate a bit stream, and
      the identification information is information for identifying the RGB_base component and the RGB_view component.
(10) An information processing method, including:
   performing atlas transformation on alpha images of 3D data to generate an atlas image of an alpha component;
   encoding the atlas image of the alpha component;
   performing the atlas transformation on an RGB image of the 3D data to generate an atlas image of RGB components; and
   encoding the atlas image of the RGB components, in which
   the alpha image is distribution information of the alpha component indicating a presence of an object in a single layer in a layer group expressing a three-dimensional space,
   the RGB image is information indicating a distribution of the RGB components indicating color information of the object in a plurality of consecutive layers in the layer group,
   the 3D data includes, for the three-dimensional space, the alpha image for each of the single layers and the RGB image for every plurality of consecutive layers, and
   the atlas transformation is processing of arranging, in the atlas image, a non-zero region included in the single alpha image or a non-zero region included in the RGB image, that corresponds to a non-zero region included in one or a plurality of the alpha images.
(11) An information processing apparatus, including:
   a first decoding unit which decodes encoded data to generate an atlas image of an alpha component;
   a first atlas inverse transformation unit which performs atlas inverse transformation on the atlas image of the alpha component to generate alpha images of 3D data;
   a second decoding unit which decodes encoded data to generate an atlas image of RGB components; and
   a second atlas inverse transformation unit which performs the atlas inverse transformation on the atlas image of the RGB components to generate an RGB image of the 3D data, in which
   the alpha image is distribution information of the alpha component indicating a presence of an object in a single layer in a layer group expressing a three-dimensional space,
   the RGB image is information indicating a distribution of the RGB components indicating color information of the object in a plurality of consecutive layers in the layer group,
   the 3D data includes, for the three-dimensional space, the alpha image for each of the single layers and the RGB image for every plurality of consecutive layers, and
   the atlas inverse transformation is inverse processing of atlas transformation for arranging, in the atlas image, a non-zero region included in the single alpha image or a non-zero region included in the RGB image, that corresponds to a non-zero region included in one or a plurality of the alpha images.
(12) The information processing apparatus according to (11), in which
   the RGB image includes an RGB_base image indicating a distribution of an RGB_base component out of the RGB components and an RGB_view image indicating a distribution of an RGB_view component out of the RGB components,
   the second decoding unit is configured to decode the encoded data to generate an atlas image of the RGB_base component and an atlas image of the RGB_view component,
   the second atlas inverse transformation unit is configured to perform the atlas inverse transformation on the atlas image of the RGB_base component and the atlas image of the RGB_view component using atlas transformation information common to the RGB_base component and the RGB_view component, and
   the atlas transformation information is information indicating a content of the atlas transformation.
(13) The information processing apparatus according to (11), in which
   the RGB image includes an RGB_base image indicating a distribution of an RGB_base component out of the RGB components and an RGB_view image indicating a distribution of an RGB_view component out of the RGB components,
   the RGB_base image and the RGB_view image have different sizes,
   the second decoding unit is configured to decode each of encoded data of an atlas image of the RGB_base component and encoded data of an atlas image of the RGB_view component, and
   the second atlas inverse transformation unit is configured to perform the atlas inverse transformation mutually independently on the atlas image of the RGB_base component and the atlas image of the RGB_view component.
(14) The information processing apparatus according to (13), in which
   the second atlas inverse transformation unit is configured to perform the atlas inverse transformation on the atlas image of the RGB_base component using atlas transformation information of the RGB_base component and perform the atlas inverse transformation on the atlas image of the RGB_view component using atlas transformation information of the RGB_view component, and
   the atlas transformation information is information indicating a content of the atlas transformation.
(15) The information processing apparatus according to (13) or (14), further including:
   an enlargement processing unit which enlarges the alpha images and the RGB_view image.
(16) The information processing apparatus according to (11), in which
   the RGB image includes an RGB_base image indicating a distribution of an RGB_base component out of the RGB components and an RGB_view image indicating a distribution of an RGB_view component out of the RGB components,
   the RGB_base image and the RGB_view image have different sizes,
   the second decoding unit is configured to decode each of encoded data of an atlas image of the RGB_base component and encoded data of an atlas image of the RGB_view component, and
   the second atlas inverse transformation unit is configured to perform the atlas inverse transformation on the atlas image of the RGB_base component and the atlas image of the RGB_view component using atlas transformation information of the RGB_base component or the RGB_view component.
(17) The information processing apparatus according to (16), further including:
   a reduction processing unit which reduces the atlas transformation information of the RGB_base component or the RGB_view component.
(18) The information processing apparatus according to any one of (11) to (17), in which
   the RGB image includes an RGB_base image indicating a distribution of an RGB_base component out of the RGB components and an RGB_view image indicating a distribution of an RGB_view component out of the RGB components, and
   the information processing apparatus further includes:
      a demultiplexing unit which demultiplexes a bit stream to generate encoded data of the atlas image of the alpha component, encoded data of the atlas image of the RGB_base component, and encoded data of the atlas image of the RGB_view component.
(19) The information processing apparatus according to (18), in which
   the demultiplexing unit demultiplexes the bit stream using identification information for identifying the RGB_base component and the RGB_view component.
(20) An information processing method, including:
   decoding encoded data to generate an atlas image of an alpha component;
   performing atlas inverse transformation on the atlas image of the alpha component to generate alpha images of 3D data;
   decoding encoded data to generate an atlas image of RGB components; and
   performing the atlas inverse transformation on the atlas image of the RGB components to generate an RGB image of the 3D data, in which
   the alpha image is distribution information of the alpha component indicating a presence of an object in a single layer in a layer group expressing a three-dimensional space,
   the RGB image is information indicating a distribution of the RGB components indicating color information of the object in a plurality of consecutive layers in the layer group,
   the 3D data includes, for the three-dimensional space, the alpha image for each of the single layers and the RGB image for every plurality of consecutive layers, and
   the atlas inverse transformation is inverse processing of atlas transformation for arranging, in the atlas image, a non-zero region included in the single alpha image or a non-zero region included in the RGB image, that corresponds to a non-zero region included in one or a plurality of the alpha images.

### Reference Signs List

- 300: information processing system
- 311: NeX learning device
- 312: NeX MPI generation device
- 313: post-processing device
- 314: packing device
- 315: encoding device
- 316: decoding device
- 317: unpacking device
- 318: rendering device
- 319: display pre-processing device
- 320: display device
- 511: non-zero region extraction unit
- 512: atlas transformation unit
- 513: encoding unit
- 514: mask image generation unit
- 515: atlas transformation unit
- 516: encoding unit
- 517: multiplexing unit
- 551: demultiplexing unit
- 552: decoding unit
- 553: atlas inverse transformation unit
- 554: decoding unit
- 555: atlas inverse transformation unit
- 611: non-zero region extraction unit
- 612: non-zero region extraction unit
- 613: mask image generation unit
- 614: mask image generation unit
- 615: atlas transformation unit
- 616: atlas transformation unit
- 617: encoding unit
- 618: encoding unit
- 651: enlargement processing unit
- 652: decoding unit
- 653: atlas inverse transformation unit
- 654: decoding unit
- 655: atlas inverse transformation unit
- 656: enlargement processing unit
- 681: reduction processing unit
- 900: computer

## Claims

1. An information processing apparatus, comprising:
a first atlas transformation unit which performs atlas transformation on alpha images of 3D data to generate an atlas image of an alpha component;
a first encoding unit which encodes the atlas image of the alpha component;
a second atlas transformation unit which performs the atlas transformation on an RGB image of the 3D data to generate an atlas image of RGB components; and
a second encoding unit which encodes the atlas image of the RGB components.

2. The information processing apparatus according to claim 1, further comprising:
a mask image generation unit which generates a mask image in which non-zero regions of the alpha images of the plurality of consecutive layers are synthesized, wherein
the second atlas transformation unit is configured to perform the atlas transformation on the RGB image using the mask image.

3. The information processing apparatus according to claim 2, wherein
the RGB image includes an RGB_base image indicating a distribution of an RGB_base component out of the RGB components and an RGB_view image indicating a distribution of an RGB_view component out of the RGB components,
the second atlas transformation unit is configured to perform the atlas transformation on the RGB_base image and the RGB_view image to generate an atlas image of each of the RGB_base image and the RGB_view image, and generate atlas transformation information common to the RGB_base component and the RGB_view component, and
the atlas transformation information is information indicating a content of the atlas transformation.

4. The information processing apparatus according to claim 1, wherein
the RGB image includes an RGB_base image indicating a distribution of an RGB_base component out of the RGB components and an RGB_view image indicating a distribution of an RGB_view component out of the RGB components, and
the second atlas transformation unit is configured to perform the atlas transformation mutually independently on the RGB_base image and the RGB_view image having different sizes.

5. The information processing apparatus according to claim 4, wherein
the second atlas transformation unit is configured to perform the atlas transformation on the RGB_base image to generate atlas transformation information of the RGB_base component, and perform the atlas transformation on the RGB_view image to generate atlas transformation information of the RGB_view component, and
the atlas transformation information is information indicating a content of the atlas transformation.

6. The information processing apparatus according to claim 4, further comprising:
a mask image generation unit which generates, with respect to each of the RGB_base image and the RGB_view image, a mask image in which non-zero regions of the alpha images of the plurality of consecutive layers are synthesized, wherein
the second atlas transformation unit is configured to perform the atlas transformation on the RGB_base image using the mask image for the RGB_base image, and perform the atlas transformation on the RGB_view image using the mask image for the RGB_view image.

7. The information processing apparatus according to claim 4, further comprising:
a reduction processing unit which reduces the alpha images and the RGB_view image, wherein
the first atlas transformation unit is configured to perform the atlas transformation on the reduced alpha images, and
the second atlas transformation unit is configured to perform the atlas transformation mutually independently on the RGB_base image and the reduced RGB_view image.

8. The information processing apparatus according to claim 1, wherein
the RGB image includes an RGB_base image indicating a distribution of an RGB_base component out of the RGB components and an RGB_view image indicating a distribution of an RGB_view component out of the RGB components,
the RGB_base image and the RGB_view image have different sizes,
the second atlas transformation unit is configured to perform the atlas transformation on the RGB_base image and the RGB_view image to generate atlas transformation information of the RGB_base component or the RGB_view component, and
the atlas transformation information is information indicating a content of the atlas transformation.

9. The information processing apparatus according to claim 1, wherein
the RGB image includes an RGB_base image indicating a distribution of an RGB_base component out of the RGB components and an RGB_view image indicating a distribution of an RGB_view component out of the RGB components,
the second atlas transformation unit is configured to perform the atlas transformation on the RGB_base image and the RGB_view image to generate an atlas image of each of the RGB_base image and the RGB_view image,
the information processing apparatus further comprises:
a multiplexing unit which multiplexes, using identification information, encoded data of the atlas image of the alpha component, encoded data of the atlas image of the RGB_base component, and encoded data of the atlas image of the RGB_view component, to generate a bit stream, and
the identification information is information for identifying the RGB_base component and the RGB_view component.

10. An information processing method, comprising:
performing atlas transformation on alpha images of 3D data to generate an atlas image of an alpha component;
encoding the atlas image of the alpha component;
performing the atlas transformation on an RGB image of the 3D data to generate an atlas image of RGB components; and
encoding the atlas image of the RGB components.

11. An information processing apparatus, comprising:
a first decoding unit which decodes encoded data to generate an atlas image of an alpha component;
a first atlas inverse transformation unit which performs atlas inverse transformation on the atlas image of the alpha component to generate alpha images of 3D data;
a second decoding unit which decodes encoded data to generate an atlas image of RGB components; and
a second atlas inverse transformation unit which performs the atlas inverse transformation on the atlas image of the RGB components to generate an RGB image of the 3D data.

12. The information processing apparatus according to claim **11,** wherein
the RGB image includes an RGB_base image indicating a distribution of an RGB_base component out of the RGB components and an RGB_view image indicating a distribution of an RGB_view component out of the RGB components,
the second decoding unit is configured to decode the encoded data to generate an atlas image of the RGB_base component and an atlas image of the RGB_view component,
the second atlas inverse transformation unit is configured to perform the atlas inverse transformation on the atlas image of the RGB_base component and the atlas image of the RGB_view component using atlas transformation information common to the RGB_base component and the RGB_view component, and
the atlas transformation information is information indicating a content of the atlas transformation.

13. The information processing apparatus according to claim 11, wherein
the RGB image includes an RGB_base image indicating a distribution of an RGB_base component out of the RGB components and an RGB_view image indicating a distribution of an RGB_view component out of the RGB components,
the RGB_base image and the RGB_view image have different sizes,
the second decoding unit is configured to decode each of encoded data of an atlas image of the RGB_base component and encoded data of an atlas image of the RGB_view component, and
the second atlas inverse transformation unit is configured to perform the atlas inverse transformation mutually independently on the atlas image of the RGB_base component and the atlas image of the RGB_view component.

14. The information processing apparatus according to claim 13, wherein
the second atlas inverse transformation unit is configured to perform the atlas inverse transformation on the atlas image of the RGB_base component using atlas transformation information of the RGB_base component, and perform the atlas inverse transformation on the atlas image of the RGB_view component using atlas transformation information of the RGB_view component, and
the atlas transformation information is information indicating a content of the atlas transformation.

15. An information processing method, comprising:
decoding encoded data to generate an atlas image of an alpha component;
performing atlas inverse transformation on the atlas image of the alpha component to generate alpha images of 3D data;
decoding encoded data to generate an atlas image of RGB components; and
performing the atlas inverse transformation on the atlas image of the RGB components to generate an RGB image of the 3D data.
